# EUROPEAN PATENT SPECIFICATION

(11) **EP 1 976 761 B1**
(45) Date of publication and mention of the grant of the patent: **05.12.2012**
(21) Application number: 06850515.5
(22) Date of filing: 03.10.2006
(51) Int. Cl.: B64D 27/02, B64G 1/00, B64G 1/14, B64G 3/00, A63K 3/00, B64G 1/36

(54) **ROCKET-POWERED VEHICLE RACING SYSTEM**
SYSTEM FÜR RENNEN MIT RAKETENGETRIEBENEN FAHRZEUGEN
SYSTEME DE COURSE DE VEHICULES PROPULSES PAR FUSEE

(30) Priority: 03.10.2005 US 240638; 22.05.2006 US 747856 P; 02.10.2006 US 538014
(43) Date of publication of application: 08.10.2008
(73) Proprietor: Rocket Racing, Inc., New York NY 10174 (US)
(72) Inventor: DIAMANDIS, Peter, H., Santa Monica, CA 90401 (US); WHITELAW, Granger, B., Red Bank, NJ 07701 (US); D'ANGELO, Michael, R., MA 02176 (US)
(74) Representative: Van Breda, Jacobus
(86) International application number: PCT/US2006/038750
(87) International publication number: WO 2007/120182

(56) References cited:
- EP-A- 0 511 154
- EP-A- 0 660 131
- EP-A- 1 057 503
- WO-A-02/00318
- GB-A- 2 373 658
- US-A- 4 816 828
- US-A- 5 873 549
- US-A- 6 080 063
- US-B1- 6 811 113
- ANONYMOUS, [Online] 22 May 2005, XP008128663 Retrieved from the Internet: <URL:www.aero-gp.com.>

## Description

### BACKGROUND OF THE INVENTION

### Field of Invention (Technical Field):

Embodiments of this invention relate generally to racing competitions, display methods and systems related to racing competitions, and methods for generating revenue with respect to racing competitions. More particularly, embodiments of the present invention relate to rocket-powered vehicle racing competitions comprising racing methods, rocket-powered vehicles, spaceports, methods of observer interaction, methods of pilot navigation, methods of providing separation between rocket powered vehicles, safety monitoring, adaptive display and, virtual participation in a rocket-powered vehicle racing competition and related apparatus. In addition, embodiments of the invention relate to integrated avionics and simulation systems that combine the real world with the virtual word in real-time, and allow for variable porting, such as a hybrid format, to a wide variety of viewing and interactive display formats and architectures.

### Description of Related Art:

Car racing is a well-established industry with such variants as the INDIANAPOLIS 500 races, NASCAR races and FORMULA-1 races. These racing competitions include a pre-specified car design, a specially designed track and direct viewing of the race by the general public in a stadium setting. Automobile races have been extremely successful in attracting very large corporate sponsorship and significant revenue from broadcast rights. These races have also lead to significant breakthroughs in automotive design and performance. Car racing, however, appeals to a limited audience that primarily comprises race enthusiasts.

Yacht racing is also a well-established industry with variants such as the LOUIS VUITTON AMERICA'S CUP competition. Similar to car racing, yacht racing competitions involve a pre-specified yacht design, a specially designed track and direct observation by the general public. Yacht races have also been extremely successful in attracting corporate sponsorship and significant revenue from broadcast rights, and have lead to significant breakthroughs in boating design and performance.

Manned rocket launches have traditionally been high visibility events that gamer tremendous public interest beyond enthusiast groups, but which have never attracted significant sponsorships or media/broadcast rights. This is because rocket launches typically cannot be 'scheduled', as their actual launch time and date depend on when the payload and rocket are ready for deployment, and on weather conditions. Launch delays are commonplace and lead to great difficulty when scheduling network broadcast time. Networks may only pay for the broadcast of events that they know may occur as scheduled (e.g., football games, Olympic events, etc.). With regard to sponsorships, sponsors enjoy regularity and repeatability in the events that they sponsor (e.g., car races, golf classics, etc.). They also enjoy standardization in the event and in the location of their logos on the hardware or participants. They may require that the events have network coverage in order to extend the value of their sponsorship dollars to millions of viewers worldwide. Further, they desire that the events involve people (e.g., heroes) that participate in the events, which can make the launch of satellites by unmanned rockets uninteresting and inconsequential to the public.

Unfortunately, conventional manned rockets have been government owned and operated (e.g., the U.S. Space Shuttle and the Russian Soyuz), which do not actively market sponsorships. To promote the development and flight of rocket-powered vehicles able to provide low-cost commercial transport of humans into space outside of government sponsorship, the non-profit X PRIZE foundation has established the X PRIZE COMPETITION. The X PRIZE COMPETITION is a competition with a US $10,000,000 prize directed to jump starting the space tourism industry through competition between the most talented entrepreneurs and rocket experts in the world. The $10 million cash prize was awarded on October 4, 2004 to Mojave Aerospace Ventures for being the first team that privately financed, built and launched a rocket-powered vehicle able to carry three people to 100 kilometers (62.5 miles), returned the rocket-powered vehicle safely to Earth, and repeated the launch with the same vehicle within two weeks.

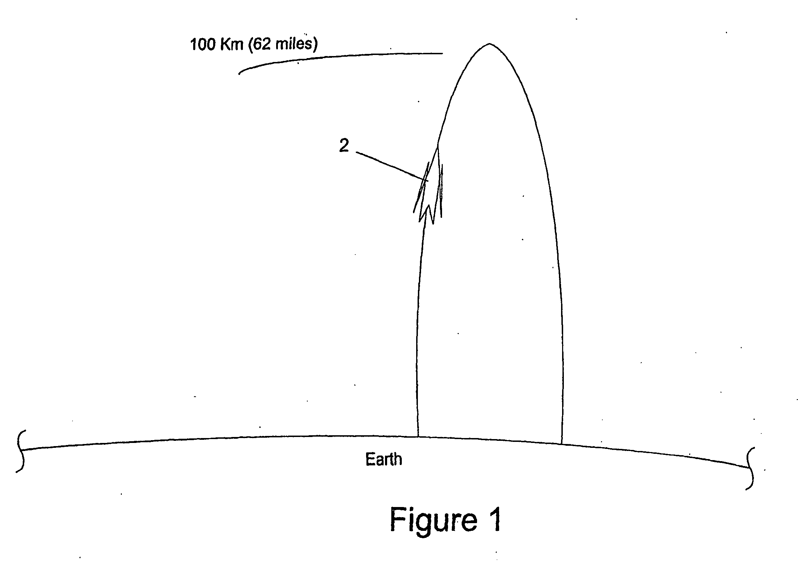

Fig. 1 Illustrates the X PRIZE COMPETITION. As shown, the winning team launches a manned rocket-powered vehicle **2** to an altitude greater than 100 km twice within a two-week period. Rocket-powered vehicle **2** may be launched at a location and a time of the respective team's choosing. The competition is a "first to accomplish" competition, in which the winning team is the first one to accomplish the established criteria. Although the X PRIZE COMPETITION is an excellent Introduction into the realm of privately owned rocket-powered vehicles, it does not lend itself to public involvement in a competition atmosphere and to the marketing interest of other competitions, such as car racing and yacht racing competitions.

EP-A-1 057 503 (SAFRONOV SERGEI MIKHAILOVICH [RU] 6 December 2000 (2000-12-06) discloses a method for playing a space game and devices for realising this method.

EP-A-0 660 131 (OSEN KARL [CH] 28 June 1995 (1995-06-28) relates to a camera guidance system.

### BRIEF SUMMARY OF THE INVENTION

The method for racing an aerial vehicle according to the present invention is defined in claim 1, embodiments of the invention being defined in the dependent claims.

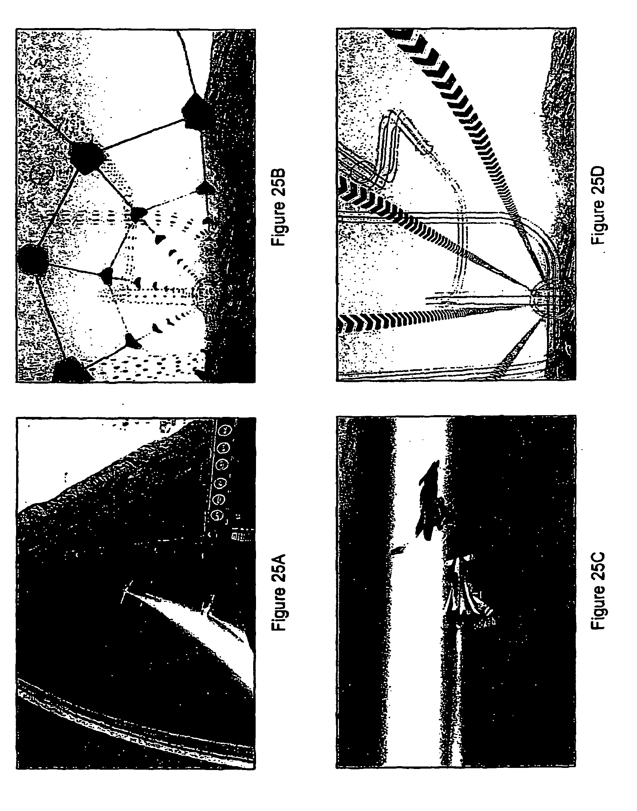

Referring now to Figs. 25A, B, C, and D, aspects of an embodiment of the present invention are illustrated. Fig, 25A, illustrates a pilot-perspective view of a race against a few competitors, along with a heads-up-display wherein information Is presented to the pilot. Figs. 25B and 25D illustrate a couple of examples of possible computer-generated visual indicators which, at least in part, comprise a rocket-powered race course according to an embodiment of the present invention. Fig. 25C illustrates an example of two rocket-powered vehicles racing one another.

### BRIEF DESCRIPTION OF THE SEVERAL VIEWS OF THE DRAWINGS

In the drawings:

Fig. 1 illustrates a prior art rocket-powered vehicle competition;

Fig. 2 illustrates a rocket-powered vehicle competition according to an embodiment of the invention;

Fig. 3 illustrates a method for racing rocket-powered vehicles in the rocket-powered vehicle competition of Fig. 2;

Fig. 4 illustrates a perspective view of a portion of a spaceport according to an embodiment of the invention for use with the rocket-powered vehicle competition of Fig. 2;

Fig. 5 illustrates a top-view diagram of the spaceport of Fig. 4;

Fig. 5A illustrates a portion of the spaceport diagram of Fig. 5;

Fig. 6 illustrates a rocket-powered vehicle according to an embodiment of the invention for use with the rocket-powered vehicle competition of Fig. 2;

Fig. 7 illustrates a diagram of a flight system and a ground system according to embodiments of the invention for use with the rocket-powered vehicle competition of Fig. 2, the spaceport of Fig. 5 and the rocket-powered vehicle of Fig. 6;

Fig. 8 illustrates a diagram of the telemetry unit assembly of Fig. 7;

Fig. 9 illustrates a rocket-powered vehicle competition according to another embodiment of the invention;

Fig. 10 illustrates a method for racing rocket-powered vehicles in the rocket-powered vehicle competition of Fig. 9;

Fig. 11 illustrates a top-view diagram of a portion of a spaceport according to an embodiment of the invention for use with the rocket-powered vehicle competition of Fig. 9;

Fig. 12 illustrates a display for use with the spaceport of Fig. 11;

Fig. 13 illustrates a telemetry computer according to an embodiment of the invention for use with the rocket-powered vehicle competitions of Figs. 2 and 9;

Figs. 14A and 14B illustrate rocket-powered vehicle competitions according to embodiments of the invention;

Fig. 14C illustrates a top view diagram of a support station of a spaceport supporting the rocket-powered vehicle competitions of Figs. 14A and 14B;

Fig. 15 illustrates a method for racing rocket-powered vehicles in the rocket-powered vehicle competitions of Figs. 14A and 14B;

Fig. 16 illustrates a rocket-powered vehicle according to an embodiment of the invention for use with the rocket-powered vehicle competitions of Figs. 14A and 14B;

Fig. 17 illustrates another rocket-powered vehicle according to an embodiment of the invention for use with the rocket-powered vehicle competitions of Figs. 14A and 14B;

Figs. 18A, 18B and 18C illustrate the rocket-powered vehicle of Fig. 17 with and without seeding its rocket plume;

Fig. 19 illustrates a display of a rocket-powered vehicle for use with the rocket-powered vehicle competitions of Figs. 14A and 14B;

Fig. 20 illustrates a diagram of spectator server for use with the rocket-powered vehicle competitions of Figs. 14A and 14B according to an embodiment of the invention;

Fig. 21 illustrates a spectator computing device for use with the rocket-powered vehicle competitions of Figs. 14A and 14B according to an embodiment of the invention;

Fig. 22 illustrates an example flight vehicle with depictions of building blocks that can enable the collection, capture, processing and display of data that merges the real world with the virtual, which can be used along with the rocket-powered vehicle competitions of Figs. 14A and 14B;

Fig. 23 illustrates an example system level approach to data management (capture, processing and display) beginning with airborne vehicles and migrating along multiple paths that can include delivery of such real-time information over the Internet to fans worldwide, which can be part of an integrated Rangeless Air Racing Maneuvering Instrumentation System;

Fig 24 illustrates a photograph of Spaceship One and White Knight from the X Prize Competition October, 2004; and

Figs. 25A, B, C and D illustrate views of a rocket-powered vehicle race of an embodiment of the present invention.

### DETAILED DESCRIPTION OF THE INVENTION

Example rocket-powered vehicle competition

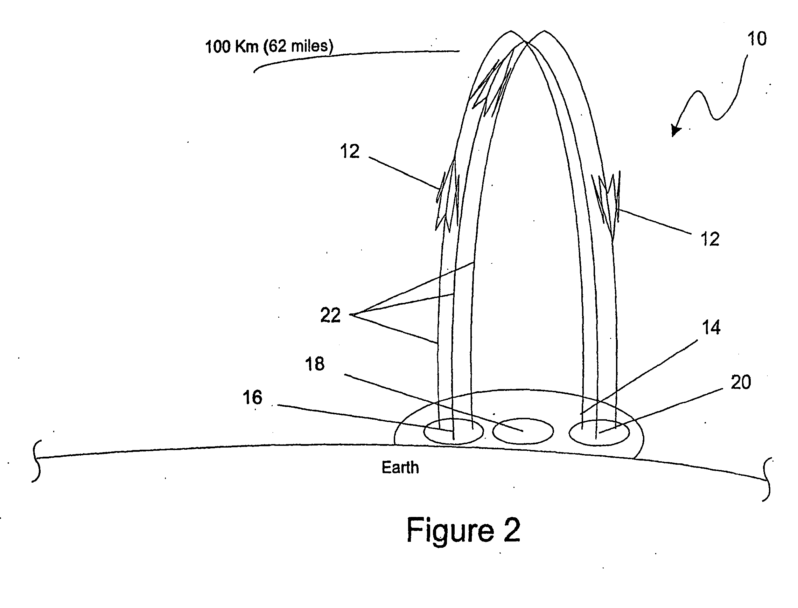

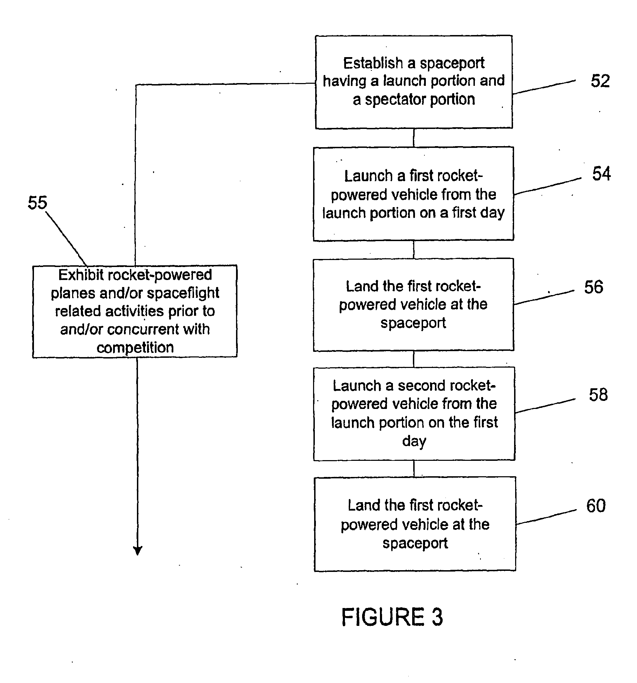

The present invention can comprise any distance from about .5 km to about 250 km, or any other distance further described herein. This distance is preferably from about 255 km to about 200 km and more preferably from about 50 km to about 150 km. Further, the term "rocket" as used throughout the specification is used to maintain simplicity and is intended to include not only rocket-powered vehicles, but also jet-powered and propeller driven vehicles. In addition, disclosures made herein relating to rocket fuel or its components is also intended to include jet fuel, or any other vehicle fuel, and/or their components.
Referring now to Figs. 2 and 3, rocket-powered vehicle competition **10** and block diagram of Fig. 3 for racing rocket-powered vehicles are generally shown according to an embodiment of the invention. As illustrated in Fig. 2, rocket-powered vehicle competition **10** generally comprises rocket-powered vehicles **12** and spaceport **14** having launch portion **16**, spectator portion **18** and landing zone **20.** During competition with each other, rocket-powered vehicles **12** follow flight paths **22**, which may include generally parabolic trajectories or other trajectories as appropriate.

An embodiment of the present invention relates to rocket-powered vehicle competition wherein two or more rocket-powered vehicles race. Fig. 3 illustrates a block diagram according to an embodiment of the invention for racing rocket-powered vehicles that comprise portions which optionally occur as part of a rocket-powered vehicle competition. The term "racing", as used herein, refers to a plurality of rocket-powered vehicles or teams competing according to pre-determined criteria. The embodiment illustrated in Fig. 3 generally comprises: establishing a spaceport having a launch portion and a spectator portion **52**; launching a first rocket-powered vehicle from the launch portion on a first day, **54**; exhibiting rocket-powered planes and/or spaceflight related activities prior to and/or concurrent with competition **55**; landing the first rocket-powered vehicle at the spaceport **56**; launching a second rocket-powered vehicle at the spaceport **56**; launching a second rocket-powered vehicle from the launch portion on the first day **58**; and landing the first rocket-powered vehicle at the spaceport **60**. In this embodiment, launching and landing the respective rockets can occur on the same day, or the landing can occur on a day different from the launch day. In addition, the launches and landings may occur at different sites or may occur at the same sight.

The following is one embodiment for practicing rocket-powered vehicle competition. In this embodiment, the competition may occur as an annual event occurring at a single spaceport, or it may also or alternatively occur at other intervals and at a plurality of spaceports. Winners of the competition may be presented with cash awards and a trophy, which can optionally be held by the winning team until the next competition. A panel of judges (not shown) may oversee the competition to make sure the rules of the competition are being upheld by participants.

A panel of judges (not shown) may be in charge of scoring during the event. The panel of judges may authorize teams of one or more rocket-powered vehicles **12** to enroll in the competition based on certain pre-determined criteria discussed later. Each team may have one or more rocket-powered vehicles **12** and associated crewmembers with which to perform racing activities.

The panel of judges may include an odd number of independent judges, and the total number of judges each year may be twice the number of teams registered plus a chief judge. The chief judge preferably oversees and coordinates the activities of the judges and reports the results. Any decision rendered by not less than two thirds of the judges may be final and binding on the teams. The timing of the appointment of judges may be 60 days before the first launching day of the competition.

The judges may monitor all flight attempts and vehicles during the competition, and the teams optionally agree to cooperate fully with the judges in monitoring flight attempts and competition requirements. Any challenge to a judge's independence or impartiality is preferably deemed waived by the parties if not made timely and prior to 30 days of the event. The judges should be unbiased and not belong or be affiliated with any of the competing teams.

The panel of judges is optionally in charge of taking necessary measurements during the competition in order to evaluate each team's progress. If a team wishes to make an appeal of a decision made by the judges, they may fill out a redress form within one hour of that decision. A hearing may be held for the requests one hour after the landing of the last launch of that day.

The following describes an optional set of rules for the competition. This set of rules can of course be altered to provide more desirable results for alternative embodiments of the present invention as will be observed by those skilled in the art upon practicing the present invention. In accordance therewith, each flight of the competition preferably carries at least three people, and each rocket-powered vehicle is preferably built with the capacity to safely carry about three persons, each of a height of about 188 centimeters and weighing about 90 kilograms. In the event that a rocket-powered vehicle flies with fewer than three persons, equivalent ballast (passenger and required life support, e.g. pressure suit) is preferably carried in-flight to bring the total passenger payload mass to a referred minimum mass. To encourage safety on the flights, teams preferably credit the mass of ejection seats or other crew escape systems against the required payload capacity.

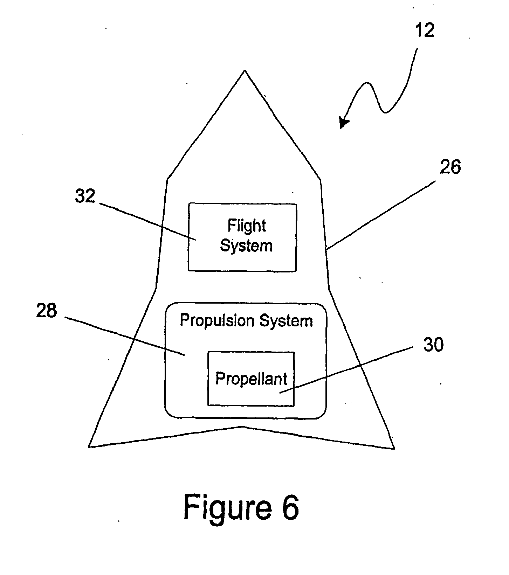

Each flight preferably reaches a minimum altitude of 100 kilometers above mean sea level. In other scenarios, competition flights may occur at other altitudes, such as about 5 kilometers to 25 kilometers above mean sea level or more. Each team is preferably responsible for providing the judges and mission control (not shown) with information that may allow the rocket-powered vehicle to be properly tracked to verify the altitude achieved by the vehicle. Methods for tracking rocket-powered vehicles are discussed later along with Figs. 6-8.

In any flight attempt, no more than about 10% of a rocket-powered vehicle's non-propellant mass may be replaced between the two consecutive flights. For multi-stage vehicles, the 10% figure preferably applies to the combined stages. The vehicle may return from both flights substantially intact, as determined by and in the sole judgment of the judges, such that the vehicle is reusable.

All stages of each team's rocket-powered vehicle preferably return and safely land within a landing zone. Failure to do so may result in the respective team's disqualification from the flight. Further, the flight should not be counted and the running clock for "turn around" will not be stopped unless the team abandons that attempt and requests a new launch slot.

Each team preferably accomplishes a minimum of two flights (as determined above) throughout the entire competition to be officially entered in the category scoring and overall scoring.

During the competition, each team may be allocated a specific GMT time, or other common time, to start their launch until they have landed, which preferably constitutes a launch slot. The launch slot duration is optionally the shorter of two hours or until the rocket-powered vehicle has landed. During this launch slot, no other team can launch. A rocket-powered vehicle is deemed to have landed when all components of the rocket-powered vehicle comes to rest. Each team may be provided with a specified area within a landing zone within which the rocket-powered vehicle is required to land. For a horizontal landing vehicle, this is a specific runway. For a vertical landing vehicle, this is a region of land or water.

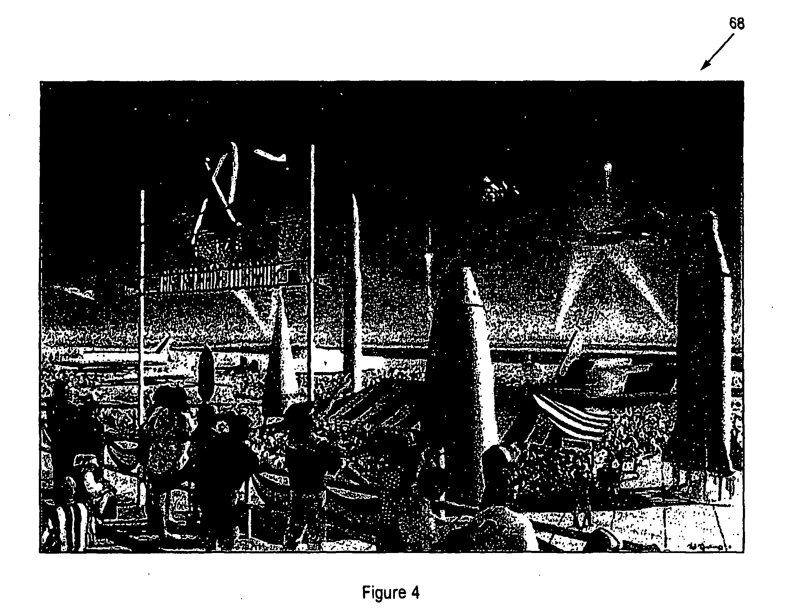

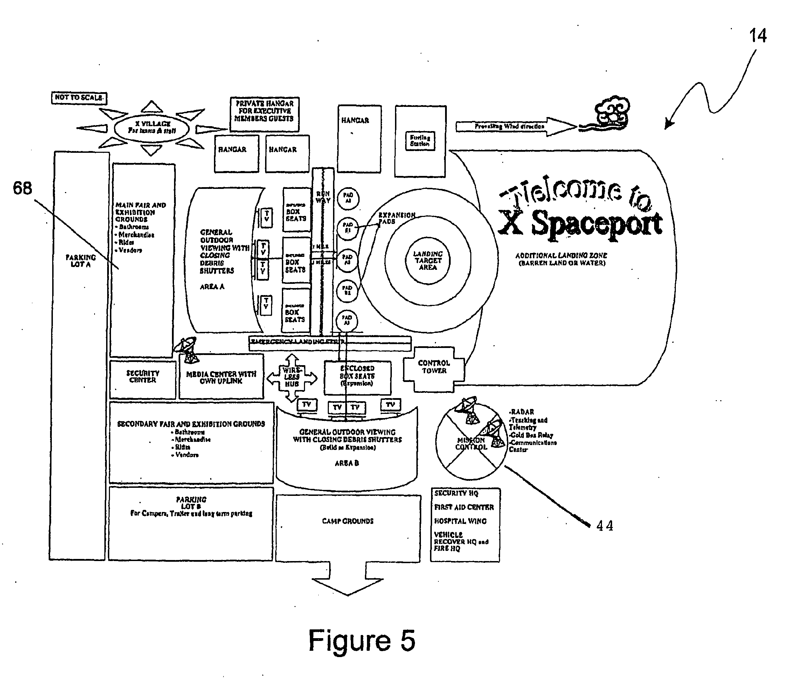

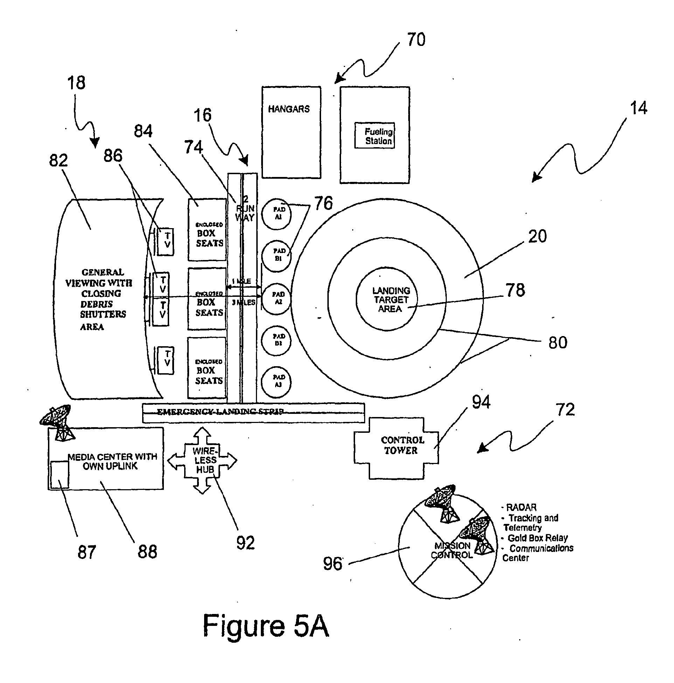

As discussed later and as illustrated in Figs. 4 and 5, in one embodiment, the landing zone location and size are preferably selected to allow for public viewing while also allowing for sufficient public safety. Each specified landing zone area preferably contains landing target area **78** (see Fig. 5A) and overshoot areas **80.** For purposes of measuring landing accuracy, a horizontal vehicle's main-gear touchdown point may be measured from the landing target (e.g., center of landing target area **78**). For a vertical landing ship, the distance of the final resting point of the ship from the landing target is preferably measured. Landing accuracy may be measured with the manned sub-orbital stage of rocket-powered vehicle **12;** however, all other stages may land in the specified area of landing zone **20.**

The terms "vehicle," "ship," or "rocket-powered vehicle" refers to all stages or parts of the launch system (e.g., tow vehicles, balloons, descent chutes, etc.). Exemplary rocket-powered vehicles **12** are described later along with Fig. 6.

There may be 28 days in a daily schedule for the competition with 14 of those days being launch days (e.g., days 11-24) for actual competition. There may be six launch slots every two hours of each launch day of the competition's 14 days totaling a minimum of 84 during the competition. The launch slots may commence at 8 a.m. local time (8am, 10am, 12pm, 2pm, 4pm, and 6pm).

Five days before the launches start, a draw may decide an order for teams to select launch slots and immediately following there may be a draft pick for all 84 slots. The 84 slots can comprise a launching order. The teams optionally own the launch slot numbers they choose in the draft pick but the precise time can be changed if a judge calls a delay. Each team may be given 72 hours, starting from the beginning of the draft pick, to trade slots.

Included in each team's registration information may be both the expected and the longest launch time interval for its rocket-powered vehicle. These times may grant the possibility of obtaining an advanced launch time.

If a team finishes its launch attempt with time remaining in the two-hour period, the next team in the order of launching can request to launch. This second team can launch if its pre-submitted materials prove that it can accomplish the launch before the end of that two-hour window. If the next team is not interested in an advanced launch, the next team after it may have the same opportunity. The order of opportunity is preferably the same as the launch slot order. If a subsequent team does launch, then its launch slot optionally becomes vacant and the team with the next launch slot has the right of first decision to whether it wants to advance its slot.

In the event that a delay is called by the judges, which causes the launches to be postponed over night, any rocket-powered vehicle competing in Category 1: Turn Around Time (described below), may be quarantined to prevent adjustments and the clock may be "paused" immediately for those teams

Only in the situation where a delay has caused a team to have multiple launch slots on a single day and that team does not to wish to fly in this many slots, that team submit a request to trade launch slots with another team or withdraw its slot and be put on a waiting list for advanced launches. If an advance launch opportunity does not arise, that team which failed to trade its launch may not be given additional time after the 84 slots.

The schedule may include "reserve days," which can compensate for potential delays. The judges have the right to decide a fair end of the competition if many delays have occurred and not all 84 slots can be used. This decision may be based upon an equal number of attempts, and/or successful flights, by the teams.

Before being registered for the competition, each team should prove that it is capable of flying its rocket-powered vehicle to a minimum altitude of 100 kilometers with a minimum crew size of three people and should re-fly the same vehicle within two weeks. These qualification flights may be done within six months of the competition. Each team may be allowed to enter the competition with two identical vehicles. However, only one vehicle may be used in the qualifying flight if information is submitted proving that the second is identical. The second ship may only be used if the first ship is deemed to be disqualified and/or incapacitated, in which case it cannot be used again in the competition.

Every competing team may be scored in the following five categories. They may make as many flight attempts as possible during the length of the competition and within the guidelines of the competition.

Category 1 entitled "Turn Around Time" is preferably the fastest time from first take-off (deemed as the start of the assigned Launch Slot) to rocket-powered vehicle **12** landing in landing zone **20** on its second successful flight. These two successful flights need not be consecutive. Both flights preferably carry a minimum of three people and reach a minimum of 100 km. Only one vehicle, however, can be used to win this category. If a team uses new vehicle **12**, then the clock preferably restarts for Category 1.

Category 2 entitled "Max PAX" is the largest number of crew carried to a minimum of 100 km altitude on a single flight. Category 3 entitled "Total PAX" is the largest number of crew carried by a same vehicle to a minimum of 100 km during entire period of the competition. If both ships are used during the competition, for scoring in Category 3, Max PAX, the crew totals are not combined and the team's results may be taken from the higher total of the two ships.

Category 4 entitled "Max Altitude" is preferably the highest altitude reached during a single flight carrying a minimum of three crewmembers. Category 5 entitled "Fastest Flight Time" is the fastest time from first take-off (deemed as the start of the assigned launch slot) to rocket-powered vehicle **12** landing in landing zone **20** on its first successful flight. The flight may carry three people and reach a minimum of 100 km. For any flight to count for a category, the crew should return to the Earth's surface in good health according to a definition set forth by the Fédération Aéronautique Internationale or an alternative destination which is preferably predetermined.

The competition may be scored using a low point scoring system. The finishing position in each category may be the team's point score (for example, first place optionally receives one point and forth place optionally receives four points). The team with the lowest combined point score from all the four categories is the competition champion.

If a team fails to complete the minimum of two flights during the competition, that team may be scored as "DNC" for "Did Not Complete" and its point score for all categories may be the total number of competitors for the entire competition plus one (if there are five teams that are competing the team that scores a DNC may receive six points in each category totaling 30 points). This is preferably done to recognize the fact that a team went through the proper pre-qualifications and application procedures and to recognize its involvement in the competition.

For each of the five categories the same tiebreaking procedure may be followed. If two or more teams are tied in a category, the team that demonstrates the closest landing to the center of landing target **78** (see Fig. 5A) may be the tiebreaker winner. In case of multiple teams acquiring the same target score, the winner may be the team that performs this task the most. If the teams have landed the exact same amount of times and the same accuracy, the finishing position of the team in that category may remain tied.

If there is a tie for the overall competition, the teams in question may have their scores compared in the following manner: The team with the most first place finishes may become the competition champion. If the amount of firsts is the same then it may go the number of second place finishes, followed by third and so on.

In the event that two or more teams have the exact same results from all of the categories, the target accuracy performance from throughout the competition may be compared. Closest finisher to the target bull's-eye wins the target accuracy performance criteria. If the tied teams all acquired the bull's-eye, then the total number of successful flights to the bull's-eye is optionally used to judge the target performance. If the teams have the exact same target performance in the competition, the competition may be awarded to the tied teams, the prize may be shared and the trophy may be time-shared.

For tiebreaker purposes, the landing accuracy record may be each team's complete efforts with both ships for Categories 2, 4 and 5 only. The landing accuracy record for Category 1 and 3 may be chosen by each team for the ship it wants to be scored.

Judges may postpone launches due to weather conditions, accidents or hazardous situations at their discretion. Judges may declare the duration of postponement within five minutes. The Judges may provide an update half way through the postponement with an option to end the postponement or declare an extension.

In advance of the competition, all teams may submit the weather condition restrictions of their vehicles they deem safe and unsafe to launch. A team can petition the judges for a launch delay due to weather, however, the judges may base their decision on the weather conditions submitted in advance by the team.

Industrial Applicability:

The invention is further illustrated by the following non-limiting examples.

Example 1: Rocket Powered Vehicle

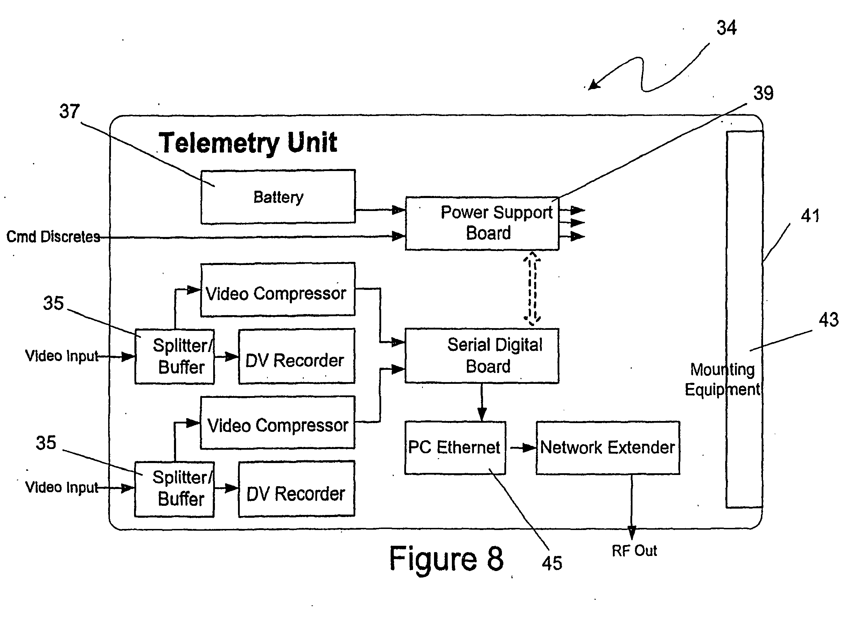

Referring now to Figs. 6 and 8, an example rocket-powered vehicle **12,** according to an embodiment of the present invention, is illustrated for use with rocket-powered vehicle competition **10** and the block diagram of Fig. 3. Rocket-powered vehicle **12** is a human-carrying, rocket powered, reusable vehicle, which may include aviation stages (not shown) and is capable of traveling at supersonic speeds. A significant portion of a flight for rocket-powered vehicle **12** should be powered by rocket engines, such as the take-off portion of flight. Each team may provide a document that describes the general nature and configuration of its vehicle, propellants, vehicle non-propellant mass, take-off and landing modes, and its intended flight plans.

Examples of rocket-powered vehicle **12** include rocket-powered vehicles developed for the X PRIZE COMPETITION (discussed in the Background). As shown in Fig. 6, rocket-powered vehicle **12** generally comprises a vehicle **26**, a propulsion system **28** comprising a propellant **30**, and a flight system **32**. Vehicle **26** is capable of carrying one or more human occupants (not shown) during flight. Flight system **32** monitors and/or controls flight conditions. Propulsion system **28** provides rocket-propulsion to vehicle **26** via propellant **30**. Propellant **30** may include a variety of rocket fuels, such as an oxidizer (e.g., liquid oxygen, nitrogen tetroxide, nitrous oxide, air, hydrogen peroxide, perchlorate, ammonium perchlorate, etc.) plus a fuel (e.g., light methane, hydrazine-UDMH, kerosene, hydroxy-terminated polybutadiene (HPTB), jet fuel, alcohol, asphalt, special oils, polymer binders, solid rocket fuel, etc.).

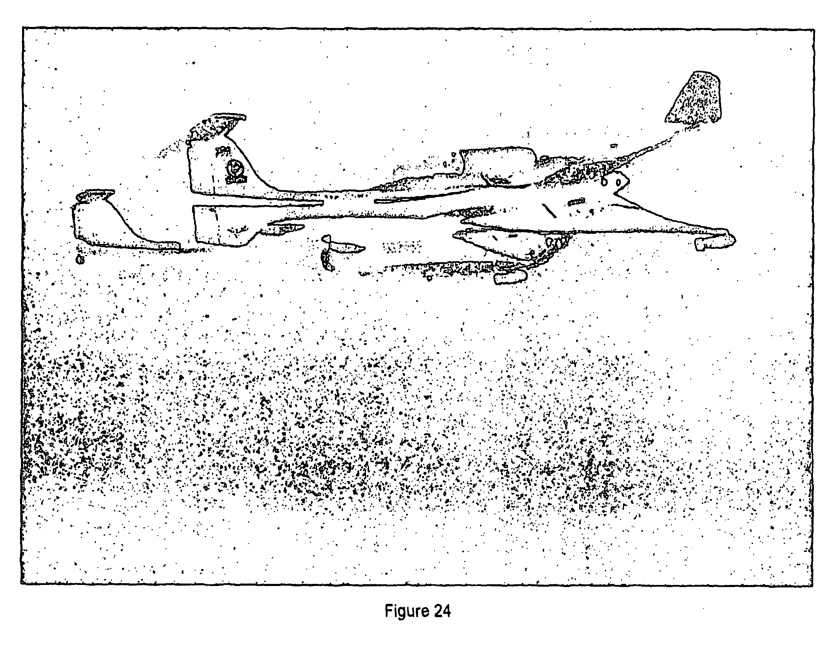

Rocket-powered vehicle **12** can be a rocket-powered vehicle named Rocket-powered vehicle 12 can be rocket-powered vehicle named "SPACESHIP ONE" (SS1) (see Fig. 24) made by SCALED COMPOSITES, LLC. On December 17, 2003, SCALED COMPOSITES, LLC flew SS1, which is a vehicle developed for the X PRIZE COMPETITION, by launching it from a aircraft carrier and then igniting its rocket engine. The United States Federal Aviation Administration provided a one-year license to SCALED COMPOSITES, LLC on April 7, 2004 for performing additional flights pursuant to its entry in the X PRIZE competition. SS1 claimed the X PRIZE COMPETITION on October 4, 2004.

SS1 is a three-person rocket-powered vehicle designed to be attached to a turbojet launch aircraft. One of the launch aircraft was named "WHITE KNIGHT" (WK) (see Fig. 24). WK launched SS1 by climbing to about 50,000 feet with SS1 attached and then dropped it into gliding flight. SS1 then used its rocket engine propulsion system **28** to climb steeply at a speed of approximately 2,500 m.p.h. SS1 coasted up to an altitude of approximately 100 km (62 miles) and then free fall downward. SS1 converted from a low-drag launch configuration to high-drag configuration, which permitted it to perform a safe, atmospheric entry at a slower speed. After it decelerated for atmospheric entry, SS1 converted back to the launch configuration of a conventional glider, which allowed it to maneuver and glide down to a runway for landing.

Other configurations or embodiments of rocket-powered vehicles are contemplated for use with the present invention. For instance, at least twelve teams competed in the X PRIZE COMPETITION with rocket-powered vehicles of various configurations and styles, which may be used in accordance with embodiments of the present invention. Rocket-powered vehicles include but are not limited to multiple stage rockets with reusable vehicles and single stage vehicles. Moreover, the flight system of each rocket-powered vehicle preferably comprises telemetry unit **34**, sensors **36** comprising cameras **38**, mode switches **40**, and transmitter **42**. Flight system **32** is preferably able to record and/or provide accurate measurements of flight conditions to the judges. As discussed later, flight system **32** may also provide real-time information to spectators as they monitor the competition.

Sensors **36** optionally include a variety of sensing equipment such as accelerometers, altimeters, velocimeters, gimbals, transponders, global positioning systems (GPS) and position sensors, etc., which may include one or more cameras **38**, for recording and/or transmitting images during flights. Cameras **38** may be positioned to view both inside and outside vehicle **26**. For instance, cameras **38** may be directed toward crewmembers inside vehicle **26** and down toward the earth. Mode switches **40** may be used as necessary to select data feeds received from various sensors and provide it to recording equipment (not shown) or to transmitter **42** for transmission to a ground system **44**.

Each team of the competition may carry telemetry unit 34 on any of their competing rocket-powered vehicles. Telemetry unit **34** preferably provides an integrated device that is independently calibrated and verified before and after qualifying flights. Each telemetry unit **34** may receive data from at least two externally mounted cameras **38** and two internally mounted cameras **38**, and is preferably connected to associated video recording hardware (not shown) and transmitting hardware. The telemetry unit weight and volume may be counted towards the crew requirement mass if desired. On multistage entries, the judges may have the option to place a telemetry unit on each stage of the rocket-powered vehicle. It is the responsibility of each team to properly install and operate the telemetry unit. Teams may petition to use their own video recording and transmitting hardware so long as the hardware meets the required technical and operational requirements.

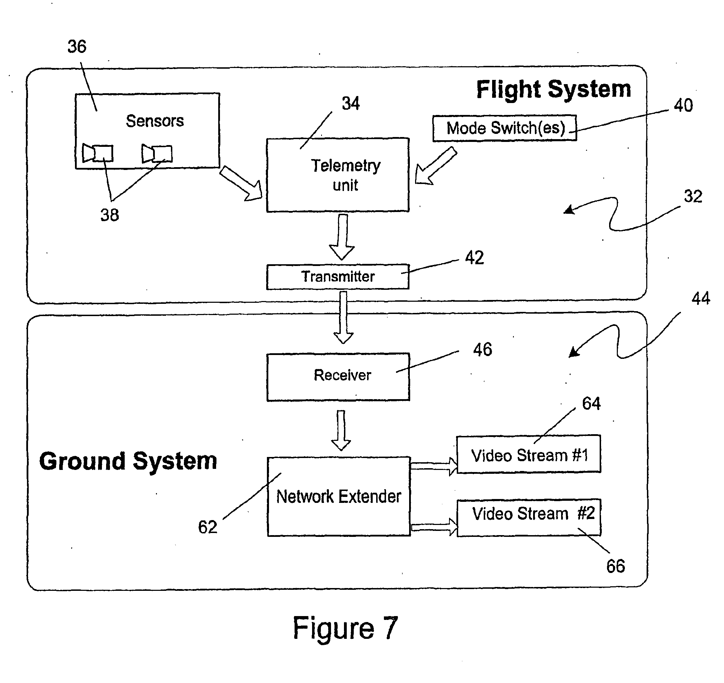

As shown in Fig. 7, data may be sent from rocket-powered vehicle **12** to ground system **44** via transmitter **42**, which may be a C-band omnidirectional transmitter or other RF transmitter. Transmitter **42** may be directed to a receiver **46** of ground system **44**, including but not limited to, a C-band satellite dish, to provide substantially real-time monitoring of flights. Receiver **46** may be mounted on an antenna gimbal (not shown) to permit it to track a rocket-powered vehicle during flight for strong reception of signals transmitted therefrom. Network extender **62** converts the signals received, which may be two or more video streams **64** and **66**. For example, two or more Electrical Ground Support Equipment (EGSE) video streams may be provided during flights of rocket-powered vehicles **12**.

Fig. 8 illustrates a telemetry unit **34** which is preferably used with flight system **32**. Telemetry unit **34** is a substantially integrated unit with its own power supply **37** that can receive data from sensing equipment, process the data, store it and provide outputs to external equipment. The power supply may be a 28V battery **37** that powers a power support board **39**, which in turn provides power of various voltages to processing equipment (e.g., CPU) (not shown). Telemetry unit **34** may include a chassis **41**, such as a U-slot chassis, for containing the components of the telemetry unit, which may be conduction-cooled to reduce power consumption requirements compared with a fan-cooled system. Chassis **41** may be connected to mounting equipment **43** that is preferably standardized for installation in any of rocket-powered vehicles **12**, such as 19" rackmount equipment. Telemetry unit **34** receives inputs from sensing equipment, such as video feed from cameras **38** (see Fig. 7), which it processes and/or stores. For instance, it may convert video feed from cameras **38** into a compressible digital format (e.g., MPEG), which is optionally stored in a digital video recorder and transmitted to ground system **44** (see Fig. 7). Telemetry unit **34** may connect with the flight system **32** of the respective rocket-powered vehicle to receive appropriate command inputs and provide outputs, such as RF video output. Telemetry unit **34** may include a network interface, such as a PC Ethernet card **45**, for interfacing with the flight system and/or for providing data to the judges at completion of qualifying flights.

Example 2: Spaceport

Referring now to Figs. 4, 5 and 5a, spaceport **14** is generally illustrated. Spaceport **14** provides a pre-determined location from which rocket-powered vehicles **12** can takeoff and land, and from which spectators may view rocket-powered vehicle competition **10**. Fig. 4 is a perspective view of fair and exhibition grounds portion **68** of spaceport **14**, which permits spectators to evaluate exhibits and view takeoff and/or landing of rocket-powered vehicles **12** occurring in distant portions of spaceport **14**. Fig. 5 is top-view diagram of spaceport **14**, and Fig. 5A shows portions of the diagram of Fig. 5. Spaceport **14** may be located in a remote area, such as in the deserts of Nevada and/or New Mexico, in which an exclusive, controlled airspace may be maintained during rocket-powered vehicle competition **10**.

As illustrated in Fig. 5A, spaceport **14** generally comprises launch portion **16**, spectator portion **18**, landing zone **20**, maintenance/storage areas **70**, and control facilities **72**. Launch portion **16** may include two-way runway **74** to permit rocket-powered vehicles **12** to launch that use winged aircraft (not shown) for takeoff, and for landing winged aircraft (not shown) and/or rocket-powered vehicles **12** as needed. Launch portion **16** also comprises pads **76** from which vertical takeoff of rocket-powered vehicles **12** may occur. Landing zone **20** optionally comprises landing target area **78** with target overshoot areas **80**. As discussed above, competitors may be evaluated on how close they land their respective rocket-powered vehicle **12** to a target (e.g., bulls eye marker (not shown)) located within landing target area **78**.

Spectator portion **18** may include a variety of facilities and areas that are appropriate for the general public, such as fair grounds, exhibition grounds, campgrounds, etc. Further, spectator portion **18** may include viewing facilities located close enough to launch portion **16** and landing zone **20** to permit direct viewing of rocket-powered vehicles **12** as they takeoff and land during competitions. Spaceport **18** preferably comprises general viewing area **82** and box seats viewing area **84**. General viewing area **80** is preferably located a relatively safe distance from launch pads **76** and landing zone **20**. Viewing area **82** may be located about two to five miles from launch pads **76**, and for better viewing, general viewing area **82** may be located from about two to five miles from launch pads **76**. From these distances, spectators can directly view the launch of rocket-powered vehicles **12** with or without viewing aids (including but not limited to binoculars) without significant risks from launch failures. Viewing area **80** may be located a greater distance from landing zone **20** than from launch portion **16** due to the generally increased safety risk associated with landing rocket-powered vehicles **12** compared with launching them. To further enhance safety, general viewing area **82** may include debris shutters (not shown), which may be closed quickly in the event of an actual or anticipated unsafe incident (e.g., rocket-powered vehicle crash).

Box seats viewing area **84** is preferably located closer to launch portion **16** and landing zone 20 than general viewing area **80,** which increases the risk to the spectators located in this area. As such, box seats viewing area **84** may be enclosed to protect spectators therein, and may provide viewing via view ports made of shatter-resistant transparent materials. To enhance viewing in spectator portion **18**, televisions **86** may be provided that show close views of rocket-powered vehicles **12** during launch and landing or at other times, and to show information about competition **10**. Televisions **86** may also show substantially real-time status of rocket-powered vehicles **12** during the competitions. For example, televisions **86** may show a graphical representation of a competing rocket-powered vehicle **12** at its present location as it advances along its flight path **22** so that spectators may monitor its progress as it occurs. This information may be obtained via information acquired by the rocket-powered vehicle's telemetry unit **34** (see also Figure 8). Televisions may also show views from cameras **38** on the respective rocket-powered vehicle. Figure 8 also shows details of one embodiment of telemetry unit **34** including but not limited to: splitter buffer **35**, battery **37**, power support board, PC Ethernet **45**, and monitoring equipment **41** and **43**.

Information shown on televisions **86** may be provided from a media center **88** and/or from mission control **96** (discussed later). Media center **88** processes and collates information for display on television **86** and for providing it to spectators at other locations, media outlets, etc. As such, media center **88** may have its own satellite uplink (not shown) for sharing information related to rocket-powered vehicle competition **10.** Media center **88** may include a server or other computer **87,** which creates graphical representations of the status of rocket-powered vehicles **12** in relation to their flight paths **22**, other rocket-powered vehicles, and/or virtual pylons. The term virtual pylon as used herein means a three-dimensional location above the earth's surface. For example, a three-dimensional location may be identified by the judges (e.g., 3-dimensional geographical coordinates for a point in space) as a virtual pylon that a rocket-powered vehicle should encounter within a given distance in order to meet a criterion of passing through the virtual pylon. Computer **87** may use location information provided by telemetry units **34** of each rocket-powered vehicle **22** via ground system **44** to provide substantially real-time status and location information to the spectators. Media center **88** may also provide information to a wireless hub **92** for dissemination to spectators located at spaceport **14** and/or for transmission to others via the Internet. For example, spectators may be able to access information personally that is provided on televisions **86** and/or other information via wireless hub **92**. For instance, a first spectator may be able to monitor progress of a first team via wireless hub **92** while a second spectator monitors progress of a second team via wireless hub **92**. In one configuration, televisions **86** display a virtual crash when a team fails to maneuver around a required virtual pylon.

Much of the information provided to spectators is preferably provided via control facilities **72**. Control facilities **72** include a control tower **94** and mission control **96**. Control tower **94** provides a birds-eye view of spaceport **14** to operational control personnel, such as aircraft controllers, to assist command and control of competition **10**. Mission control **96** comprises equipment such as RADAR, tracking and telemetry equipment, ground system **44** (illustrated in Fig. 7), and communications equipment. Mission control illustrated in Figs. 5 and 5A may include ground system **44**. Information transmitted from rocket-powered vehicles **12** to ground system **44** (see Figure 7) enables command and control to monitor and verify flight paths **22** of respective rocket-powered vehicles **12**. The information may also be communicated to spectators via televisions **86** and/or wireless hub **92**, such as rocket-powered vehicle location and video feeds. Fig. 7 also shows sensors **36**, telemetry unit **34**, mode switches **40,** transmitter **42,** receiver **46,** network extender **62,** video streaming **64** and **66.**

Spaceport **14** provides a controlled venue, which when combined with rocket-powered vehicle competition **10** occurring over a defined time period, creates an exciting atmosphere that appeals to a broad cross-section of the public and to corporate sponsors, and which increases interest in the development of public space travel. To further promote a festive atmosphere at rocket-powered vehicle competitions **10**, spaceport **14** may support spaceflight-related activities that keep spectators engaged and provide hands-on experiences to involve them personally in the public spaceflight industry.

For example, spaceport **14** participating in a rocket-powered vehicle competition may support an overall mix of events and activities focused on those areas that directly compliment the public spaceflight industry. As such, a Public Spaceflight Exhibition (not shown) may be included in rocket-powered vehicle competition **10** to provide spectators the opportunity to participate in sub-orbital flights, parabolic (zero gravity) flights, and high-fidelity simulations that build public excitement as well as public acceptance of this market arena. In another embodiment, integrating public spaceflight related rides and unique astronaut training opportunities greatly enhances the competition. For a fee, spectators are preferably able to experience the sensations of space flight in rides and simulators. For instance, the Zero Gravity Corporation (ZERO-G) may provide parabolic flights in its Boeing 727 airplane and offer customers a number of parabolas, each with 30 seconds of zero-g time. ZERO-G has the capacity to carry more than 100 paying passengers per day. Additional weightlessness experiences may include neutral buoyancy simulations, which are essentially large water tanks that re-create a spacewalk in a spacesuit. Simulations of the launch and re-entry of the rocket-powered vehicles may be provided by a centrifuge to simulate the gravitational forces that the rocket-powered vehicles experience. Additionally, a full-motion interactive flight simulator, similar to the ones used for airline and military flight training, may provide additional spaceflight experiences.

Further, rocket-powered vehicle competition **10** optionally incorporates an astronaut training facility akin to SPACE CAMP that simulates the full astronaut training experience. In addition, an Air and Rocket Show segment of the rocket-powered vehicle competition is optionally provided to provide further entertainment and draw large numbers of spectators. The Exhibition can optionally include a demonstration of Unlimited Class Vehicles, which are piloted non-X PRIZE class rockets and rocket-powered vehicles. A thrilling exhibition of rocket vehicles may also be featured during the air show. For example, XCOR Aerospace's rocket powered Long EZ airplane can be a featured attraction. These exciting ships, although not directly eligible for the rocket-powered vehicle competition, may nonetheless provide an exciting and memorable demonstration of the endless possibilities and unique applications of rocket propulsion. Additionally, the teams may optionally be given the opportunity to display mock-up or partially constructed vehicles.

Example 3: Rocket-Powered Vehicle Competition With Virtual Pylons

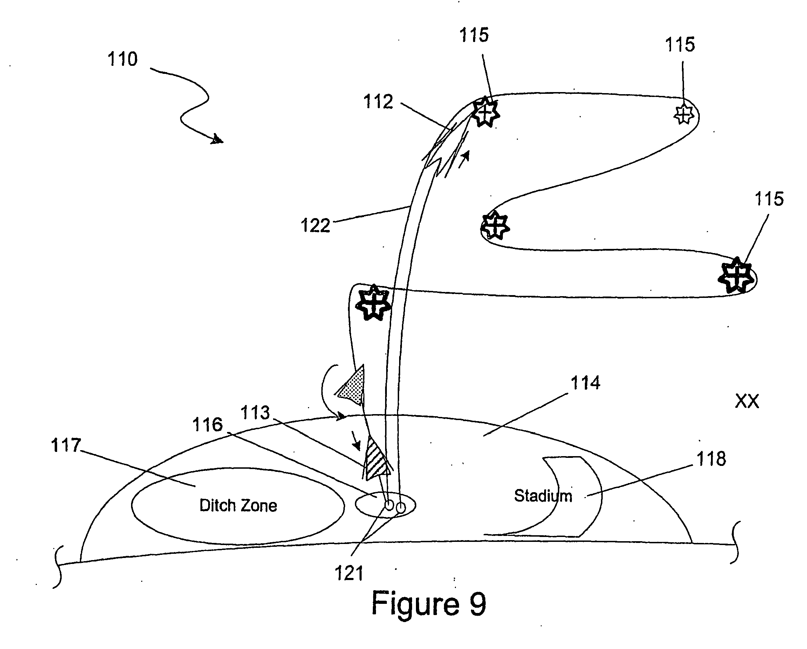

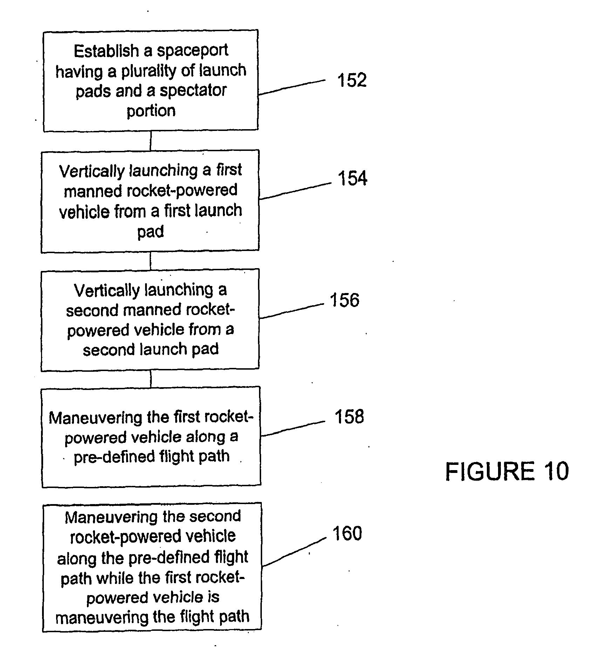

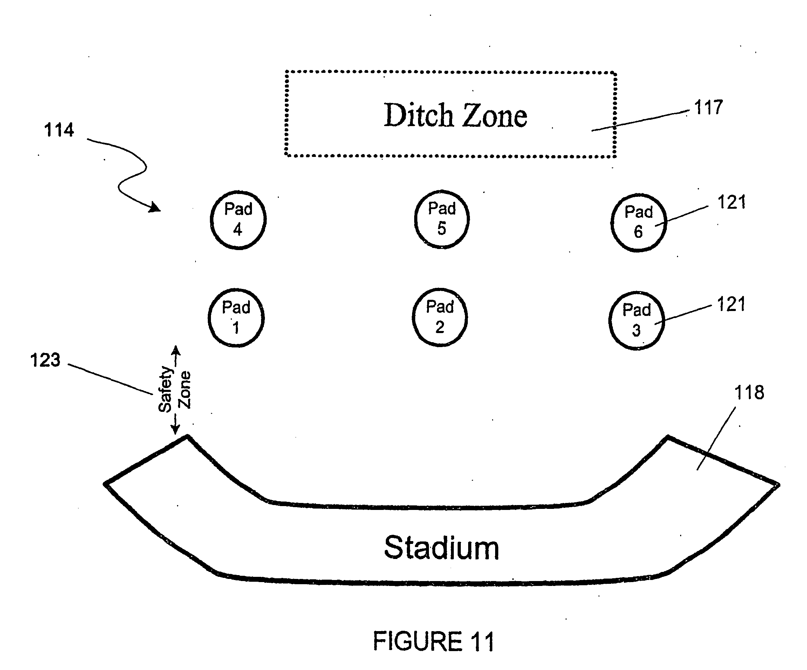

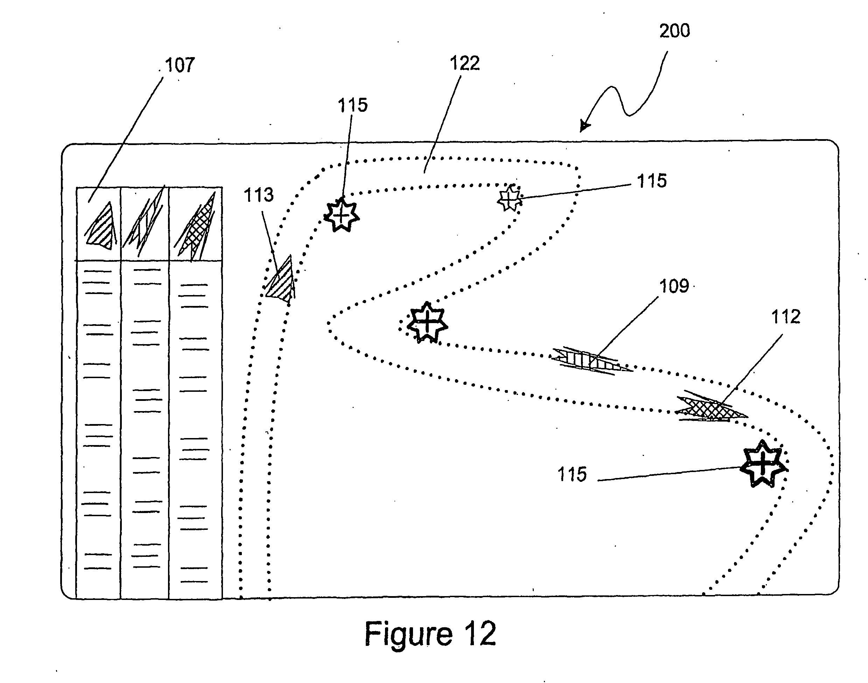

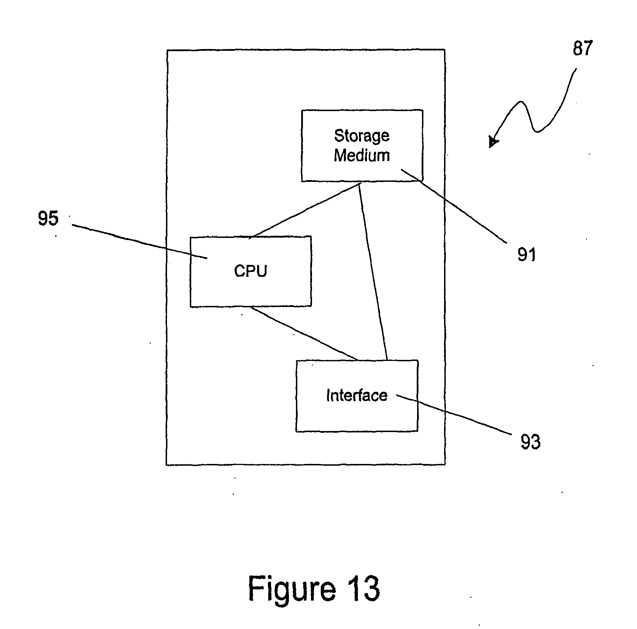

Referring now to Figs. 9-13, a rocket-powered vehicle competition **110** (Fig. 9), a block diagram of an embodiment of the present invention is generally depicted in Fig. 10, spaceport **114** (Fig. 11), display **200** (Fig. 12) and telemetry computer **87** (Fig. 13). Aspects of these further embodiments are preferably the same as previously discussed embodiments, except as discussed hereafter. Referring now to Figs. 9 and 10, rocket-powered vehicle competition **110** and a block diagram for racing rocket-powered vehicles is generally illustrated according to one embodiment of the invention. As illustrated in Fig. 9, rocket-powered vehicle competition **110** generally comprises rocket-powered vehicles **112**, **113** and spaceport **114** having launch portion **116**, spectator portion **118** and ditch zone **117**. Launch portion **116** preferably provides an area for substantially vertical takeoff and landing of rocket-powered vehicles **112** and **113**. During competition with each other, rocket-powered vehicles **112** and **113** follow pre-determined flight path **122**, which is established according to virtual pylons **115**. Pre-determined flight path **122** may include a wide variety of flight paths such as substantially vertical flight paths, parabolic flight paths, etc. In addition, pre-determined flight path **122** may include several turns that require rocket-powered vehicles **112** and **113** to perform several maneuvers. Further, a significant portion of pre-determined flight path **122** may be within direct viewing of spectators located at stadium **118** in the spectator portion. For example, flight path **122** may include virtual pylons **115** located between about 500 feet and 53,000 feet. Rocket-powered vehicles **112** and **113** maneuvering at these altitudes may be directly viewed by spectators at stadium **118** using binoculars and telescopes. Further, flight path **122** may include a plurality of sets of virtual pylons **115** located at different altitudes with safe distances disposed there between, which provides a range of altitudes that are located a relatively safe distance from stadium **118** without being too far away for viewing.

Rocket-powered vehicle competition **110** may also optionally include racing of two or more rocket-powered vehicles **112** and **113** substantially simultaneously on the same flight path **122** (i.e., racecourse). The racecourse may be formed and navigated using virtual pylons **115.** For example, each rocket-powered vehicle **112** or **113** may be provided with the three-dimensional locations of virtual pylons **115** prior to and/or during rocket-powered vehicle competition **110.** The racecourse may also optionally include virtual tunnels described by three-dimensional locations, within which the rocket-powered vehicles should remain during the race. Optionally, each rocket-powered vehicle and/or team may be provided with its own virtual tunnel within which it should remain during the race. Thus, in various combinations, the racecourse may include virtual pylons, racecourse virtual tunnels, and individual team/vehicle virtual tunnels located within a racecourse virtual tunnel. In one embodiment, the pilots of the rocket-powered vehicles may then navigate their respective rocket-powered vehicles around, through and/or proximate to the pylons according to the race criteria and the racecourse data. The pilots may use global positioning technology to determine their precise three-dimensional location with respect to the pylons and the racecourse. Each rocket-powered vehicle's three-dimensional position during the race may be provided to telemetry unit **34** during competition and may be transmitted to ground system **44** for monitoring by the judges and spectators. Fig. 9 shows an example in which rocket-powered vehicles **112** and **113** are required to maneuver around virtual pylons **115** within a pre-determined distance based on racecourse data. It is contemplated that RADAR or other location tracking systems may be used in addition to global positioning systems in order to track and maneuver the rocket-powered vehicles in relation to the virtual pylons and the racecourse data.

Fig. 10 illustrates a possible block diagram for racing rocket-powered vehicles according to an embodiment of the present invention (for example, as graphically illustrated in Fig. 9), which generally comprises: establishing a spaceport having a plurality of launch pads and a spectator portion **152**; vertically launching a first manned rocket-powered vehicle from a first launch pad **154**; vertically launching a second manned rocket-powered vehicle from a second launch pad **156**; maneuvering the first rocket-powered vehicle along a pre-defined flight path **158**; and maneuvering the second rocket-powered vehicle along the pre-defined flight path while the first rocket-powered vehicle is maneuvering the flight path **160**.

Rocket-powered vehicles **112** and **113** preferably race by competing with one another according to pre-determined criteria and along the same three-dimensional flight path **122**. In this embodiment, at least two rocket-powered vehicles preferably launch and land from spaceport **114** within view of stadium **118** and competing along flight path **122** at substantially the same time. First rocket-powered vehicle **112** vertically launches from launch portion **116** and a second rocket-powered vehicle **113** also preferably launches from launch portion **116** at substantially the same time or within a short time period after the launch of rocket-powered vehicle **112** on the same day. Both rocket-powered vehicles **112** and **113** preferably maneuver along flight path **122** and vertically land at launch portion **116**. Depending on the pre-determined criteria for the competition, rocket-powered vehicles **112** and **113** optionally repeat flight path **122** several times via several launches and landings.

Fig. 11 shows a top view of spaceport **114** for use with rocket-powered vehicle competition **110**. Safety zone **123** is preferably provided such that launch pads **121** are provided a safe distance from stadium **118**. Although any number of launch pads may exist as desired, in one embodiment, there is preferably at least six launch pads to support at least six rocket-powered vehicles in a single competition. A ditch zone **117** is preferably provided at a greater distance from stadium **118** than launch pads **121**. Ditch zone **117** is preferably a relatively large area located away from personnel and structures where rocket-powered vehicles **112** and **113** may be directed in the event of an emergency. Stadium **118** may be located from about a quarter of a mile to about ten miles from launch pads **121**, and is preferably located from about one mile to about two miles from launch pads **121.**

Stadium **118** is preferably a large arena designed to hold a large number of spectators. For instance, in one embodiment, stadium **118** may be able to hold about 1 million spectators. Stadium **118** may be a semicircle design that provides good viewability of launch pads **121** to most spectators located therein. To provide safe premises in the event of an emergency, a bunker (not shown) may be provided or stadium **118** may be substantially built within a bunker. Other safety mechanisms may exist, such as protective louvers that may be rapidly closed to provide protection, or protective transparent materials that shield spectators from debris in the event of a rocket-powered vehicle crash or collision. To improve viewability of the rocket-powered vehicle competition **110**, stadium **118** may include multiple high-definition displays that show various views of the rocket-powered vehicles. Further, seats within stadium **118** may include personal displays, which individual spectators may control to view status of the competition, information about various rocket-powered vehicles, etc. As described above with spaceport **14** in Figs. 5 and 5A, rocket-powered vehicle information, video feeds, graphical representations of flight status, etc. may be provided to displays via telemetry unit **34**, ground system **44**, mission control **96**, media center **88**, wireless hub **92**, etc.

Fig. 12 illustrates an embodiment of sample display **200** that may used with spaceports **14** and **114**. Display **200** may be shown on personal displays installed in stadium **118**, televisions within the spaceports, personal display devices (e.g., PDAs) in communication with wireless hub **92** (see Fig. 5A), etc. The example illustrated on display **200** is a graphical representation corresponding with an embodiment of rocket-powered vehicle competition **110**. As illustrated, representations of rocket-powered vehicles **109**, **112** and **113** competing in rocket-powered vehicle competition **110** are shown. Their locations in display **200** substantially represent their real-time location based on information from their respective telemetry units **34** and/or mission control **96**. Their locations show their progress along racecourse virtual tunnel **122** in relation to pylons **115** and in relation with each other. Pylons **115** may change color or otherwise indicate when a respective rocket-powered vehicle passes the pylon. For instance, pylon **115** may blink red when a rocket-powered vehicle is close to the three-dimensional location in space represented by pylon **115**. When the rocket-powered vehicle passes the three-dimensional location based on radar tracking, GPS coordinates, etc., pylon **115** preferably may turn to a solid green color and remain that way until another rocket-powered vehicle approaches.

Fig. 13 shows telemetry computer **87** that generates graphical displays showing status of the rocket-powered vehicle competition, information about rocket-powered vehicles, video feeds, etc. For instance, telemetry computer **87** may generate display **200** shown in Fig. 12. Telemetry computer **87** may be a server or other computing device. In general, telemetry computer **87** comprises interface **93**, CPU **95** and storage medium **91**, such as a hard drive, a network accessible storage location, local memory, etc. Interface **93** may include one or more interfaces, such as a wired network interface, a wireless network interface, and the like. Storage medium **91** stores software for instructing the CPU to generate displays, such as display **200**, based on information received via interface **93**. For example, telemetry computer **87** may optionally receive location information for each rocket-powered vehicle from ground system **44** (see Fig. 7) via telemetry unit **34**. The location information may be based on sensors within the respective rocket-powered vehicle, such as global positioning sensors. Telemetry computer **87** may also receive location information for the rocket-powered vehicles from mission control **96** (see Fig. 5A) determined via RADAR or other tracking and telemetry systems.

Based on the location information received for the rocket-powered vehicles, which may be received on a substantially constant, real-time basis from each competing rocket-powered vehicle, CPU **95** generates a graphical display such as display **200** showing the location of each competitor rocket-powered vehicle. In one embodiment, the graphical display may be a three-dimensional display. As illustrated in Fig. 12, the display generated by telemetry computer **87** may include virtual pylons **115** and racecourse tunnel **122**, and show the rocket-powered vehicles in relation to them. The virtual pylons **115** and racecourse information may be stored in storage medium **91** or provided via interface **93**. As also illustrated in Fig. 12, telemetry computer **87** optionally displays supplemental information **107** about each rocket-powered vehicle, such as specifications, payload, team information, etc.

In addition to being shown on displays within spaceports **14** and **114**, displays generated by telemetry computer **87** may be provided to spectators via the Internet or wireless hub **92** (see Fig. 5A). Further, telemetry computer **87** may act as a central repository to store and collate information about competitions **10** and **110** prior to, during and/or after they occur, and to provide that information to spectators, judges and/or the public. For instance, using a computing device (not shown) in communication with wireless hub **92**, a spectator may be able to navigate a three-dimensional graphical display of the race as it is occurring using data from telemetry computer **87**. The spectator may be able to zoom in and out of portions of a graphical representation of the racecourse shown on their computer to view progress of specific rocket-powered vehicles. They may also be able to switch between video feeds from one or more rocket-powered vehicles provided to telemetry computer **87** via telemetry units **34** for the rocket-powered vehicles. Thus, telemetry computer **87** may permit spectators to actively monitor the competition and the progress of all participants on a substantially real-time basis.

Rocket-powered vehicle competition **110**, sand spaceport **114** provide an exciting event with which spectators may feel a sense of participation. This is partially because racecourse tunnel **122** is a closed flight path within direct viewing by spectators (e.g., via eyesight, binoculars and telescopes) and via equipment (e.g., graphical representations of race status). To enhance the level of excitement further, rocket-powered vehicle competition may require rocket-powered vehicles **112** and **113** to complete multiple laps on racecourse **122**. This may include staying on the ground for periods of time to re-fuel and prepare the rocket-powered vehicles for further flight and multiple takeoffs and landings, which provide many opportunities for spectators to view varied aspects of the competition. Spectators may also be able to view the rocket-powered vehicles on their respective launch pads prior to the beginning of the competition.

Rocket-powered vehicles **112** and **113** (as well as rocket-powered vehicles **12** in competition 10) may be controlled by the human occupants; although, certain aspects may be computer controlled as determined by race criteria (e.g., blast off may be largely computer controlled). This makes the competition very exciting to spectators and provides "heroes" that may be created of exceptional pilots. Add to that the excitement of supersonic, rocket-propelled rocket-powered vehicles competing with one another substantially simultaneously, and a thrilling competition is created that should appeal to a large segment of society and attract corporate sponsors.

Example 4: Rocket-Powered Vehicle Competition with Direct Racing Between Participants

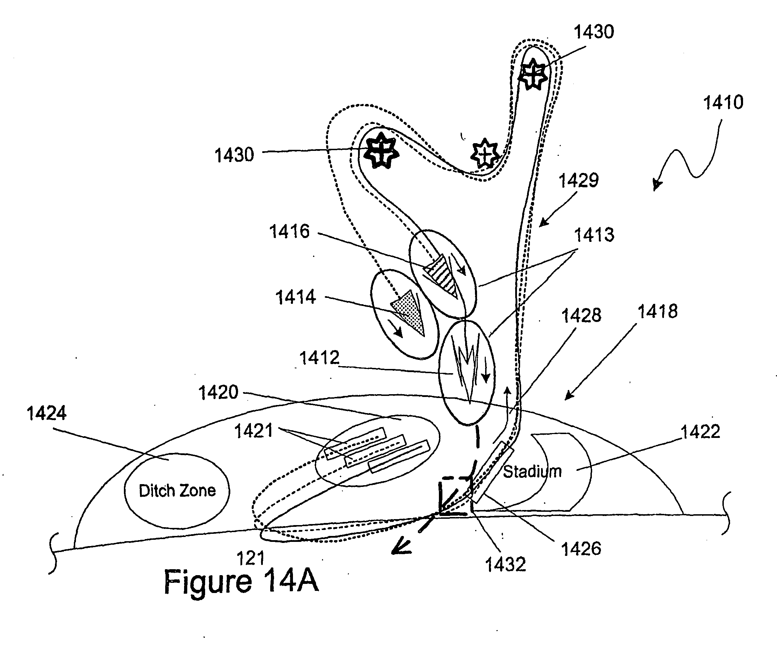

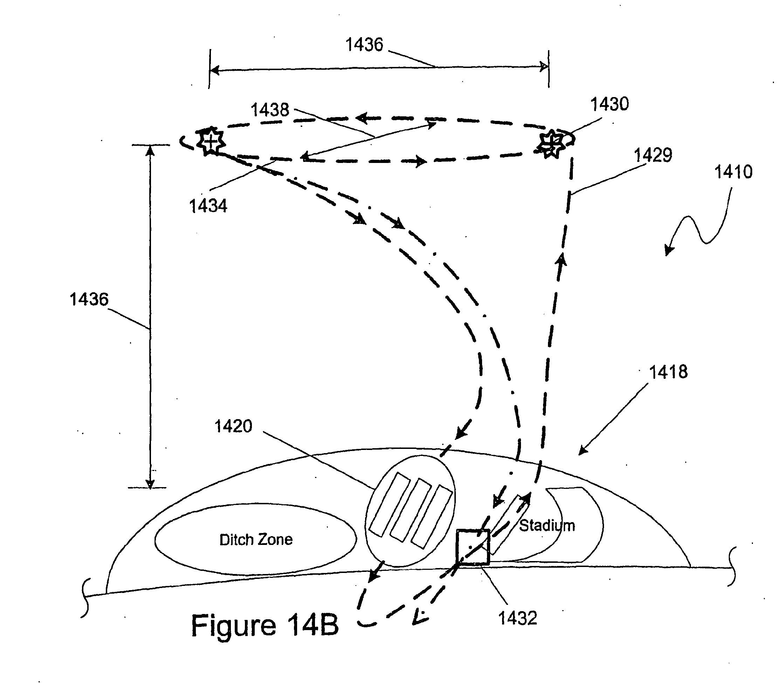

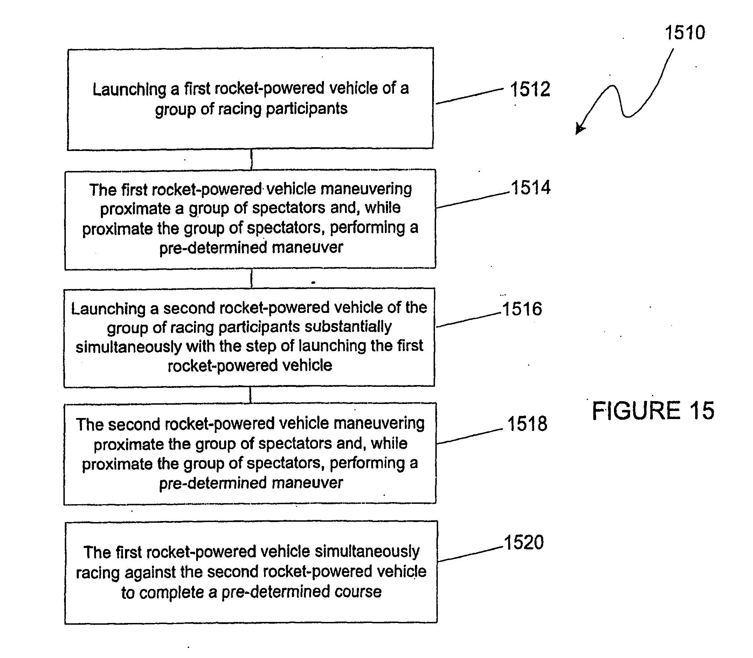

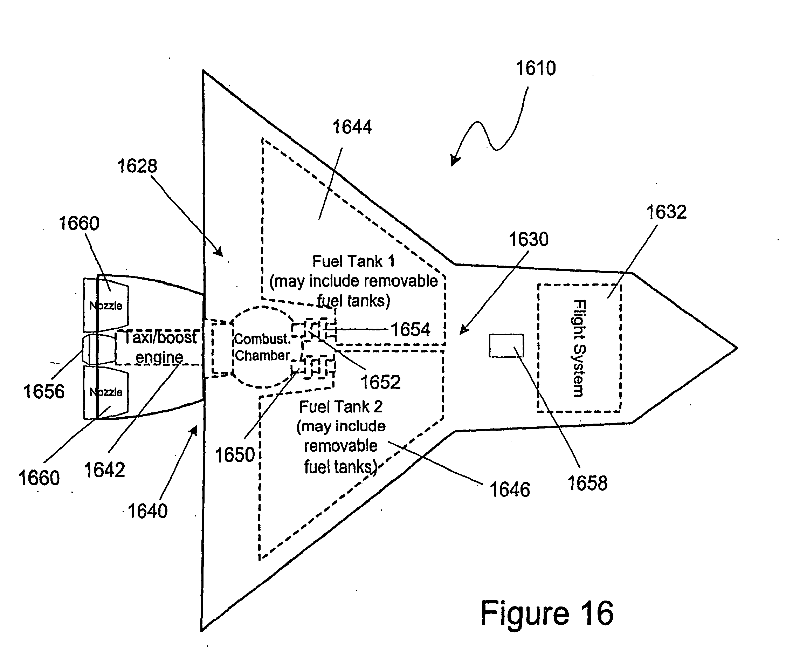

Referring now to Figs. 14A-C, 15 and 16, a rocket-powered vehicle competition **1410** (Figs. 14A and 14B), a rocket-powered vehicle racing method **1510** (Fig. 15), rocket-powered vehicle (Fig. 16) **1610** and spaceport **1418** (Figs. 14A-C), are generally illustrated. As shown in Fig. 14A, rocket-powered vehicle competition **1410** generally comprises rocket-powered vehicles **1412, 1414** and **1416,** and spaceport **1418** having launch and/or landing portion **1420,** spectator portion **1422,** a ditch zone **1424** and a touch strip **1426.**

Rocket-powered vehicle competition **1410** provides a high level of excitement for spectators and participants alike via direct, head-to-head racing between the race participants to be the first to complete a race course. The exciting atmosphere can be further enhanced for the spectators through various aspects of the racing method that may be practiced alone or in a variety of combinations comprising: vertical take-offs near the spectator portion **1422**; visual and audible mechanisms for clearly identifying participant rocket-powered vehicles; pre-determined racing parameters comprising rapid refueling and limited fuel quantity, engine burn time and/or thrust options; rocket-powered vehicle configurations based on the parameters and strategic options for the participants in response to the parameters (e.g., choices involving fuel quantity and thrust management); spectator interactivity with the race participants; and user participation in real-time races via virtual rocket-powered vehicles.

As in Fig. 15, the rocket-powered vehicle competition preferably comprises: Launching a first rocket-powered vehicle of a group of racing participants **1512**; the first rocket-powered vehicle maneuvering proximate a group of spectators and, while proximate the group of spectators, performing a pre-determined maneuver **1514**; launching a second rocket-powered vehicle of the group of racing participants substantially simultaneously with the step of launching the first rocket-powered vehicle **1516**; the second rocket-powered vehicle maneuvering proximate the group of spectators and, while proximate the group of spectators, performing a pre-determined maneuver **1518**; the first rocket-powered vehicle simultaneously racing against the second rocket-powered vehicle to complete a pre-determined course **1520**. The steps of **1514** and **1518** are optionally performed closer to the spectators than the respective launch location of each rocket-powered vehicle. This can permit the spectators to have a relatively close view of an exciting maneuver, such as vertical take-off, which they may not be able to view as closely as they could otherwise view due to safety or logistical considerations. Such a maneuver location can also permit the spectators to directly view significant portions of the race that they may otherwise not be able to view or that they may be required to view remotely (e.g., via a display). For instance, the maneuver may include the participants proceeding past a finish line or through a finish gate to complete the race. Direct spectator observation of the race completion preferably heightens the excitement of the event. In another example, each rocket-powered vehicle is optionally required to perform a vertical take-off maneuver close to the spectators at a spectator portion, which is preferably an exciting maneuver to observe due to the firing of the rockets and the rapid ascent of the rocket-powered vehicle. In addition, each rocket-powered vehicle may be required to perform a touch-and-go maneuver at a touch strip proximate the spectators while flying horizontally after its launch, after which it can perform a vertical take-off maneuver in view of the spectators. These maneuvers preferably permit the spectators to share in the excitement of launch and vertical take-off, while being protected from the greater risks associated with vehicle launch and landing at the airstrips. The rocket-powered vehicles may be required to perform various maneuvers proximate the spectators as part of landing, take off, refueling, race completion, or at other portions in the race.

Groups of two or more preferably race along the same course. Optionally, the racing may be performed in "heats" where small groups of participants race to qualify, the winners of which progress to the next level. The racing may optionally be performed as comprehensive racing between all participants. The rocket-powered vehicles may be launched abreast or in a staggered fashion, which can be advantageous for logistical and safety reasons. As illustrated in Fig. 14A, the rocket-powered vehicles optionally launch and land in a horizontal manner similar to conventional fixed wing aircraft along airstrip **1421** of launch portion **1420**, which may be a single airstrip, a plurality of shared airstrips, or a plurality of participant-specific airstrips. After launch, each rocket-powered vehicle can turn its flight path **1428** to a substantially vertical flight path **1429** and fire its rockets for vertical take-off. The rocket-powered vehicles can land on a landing strip by gliding in a manner similar to conventional fixed wing aircraft. Rocket-powered vehicles that can fly in both horizontal and vertical configurations is advantageous for racecourses requiring repeated take off and landing. An example of a rocket-powered vehicle that can fly in both configurations is illustrated in Fig. 16.

Racecourses **1429**, as illustrated in Figs. 14A and 14B, are preferably three-dimensional racecourses similar to racecourse tunnel **122** of Fig. 10, with the addition of the required touch-and-go maneuver in front of the spectators followed by a rocket relight. Racecourses **1429** are formed via racecourse data that may include markers for virtual pylons **1430,** one or more racecourse tunnels identifying flight envelopes for the competition, and one or more team/vehicle-specific tunnels within racecourse tunnels that identify flight envelopes for individual vehicles. As illustrated, the racecourse may also include one or more physical gates **1432**. The markers may be fixed or they may be varied from lap to lap, or race to race. The race may include laps around the racecourse; laps from point to point, such as around track **1434** illustrated in Fig. 14B formed via one or more virtual pylons and other racecourse data comprising coordinates for virtual tunnels; laps around various sub-portions of the racecourse; or combinations thereof. The racecourse or portions of it (e.g., virtual track **1434** discussed below along with Fig. 14B) can change from lap to lap or even randomly, which is optionally an added measure to excite the crowds. Spectators themselves may even be able to play a role in selecting from a matrix of pre-designated virtual tracks in the sky.

As in Fig. 14A for racing configuration **1410**, three-dimensional safety zones or safety bubbles **1413** are maintained around each rocket-powered vehicle while competing along the racecourse. Safety bubbles **1413** ensure that a safe separation distance is maintained between the rocket-powered vehicles, which is an even more significant concern for the head-to-head racing configurations of space competition **1410**. In one configuration, safety rules for the competition preferably require that each rocket-powered vehicle have a virtual bubble around it according to pre-determined safety criteria. If a pilot maneuvers his rocket-powered vehicle into the bubble of another rocket-powered vehicle, such as from behind during head-to-head racing, then points are deducted from the violating rocket-powered vehicle and/or team. The bubbles can be generated and maintained through navigation data sent from the rocket-powered vehicles and monitored at the spaceport. Optionally, each rocket-powered vehicle may be required to fly within its own virtual tunnel. The vehicle-specific virtual tunnels may be spaced apart a sufficient distance to ensure safe navigation with respect to competitors, but may be located proximate to one another so that all vehicles follow a substantially identical course.

For example, in accordance with the navigational monitoring aspects discussed along with the description of rocket-powered vehicle **12** in Figs. 6-8 and the spaceport of Figs. 4, 5 and 5A, the rocket-powered vehicles of racing competition **1410** is preferably outfitted with position monitoring sensors, such as global positioning system (GPS) equipment, and preferably are outfitted with high precision position monitoring equipment, such as the GPS equipment known as "differential GPS." Each rocket-powered vehicle preferably transmits its real time location to a ground control system, such as via the wireless telemetry to the ground discussed along with Fig. 7 and/or via communications with other rocket-powered vehicles. The rocket-powered vehicle flight system, the ground control system (e.g., mission control **96** illustrated in Fig. 5A), and other rocket-powered vehicles monitor the position of rocket-powered vehicles on racecourse **1429** and the safety bubbles formed around each rocket-powered vehicle. The safety bubbles may be shown to spectators via televisions **86** shown in Fig. 5A, which may include JUMBOTRON displays, via wireless devices, and/or via other network-enabled devices monitoring the racing competition **1410** over the Internet.

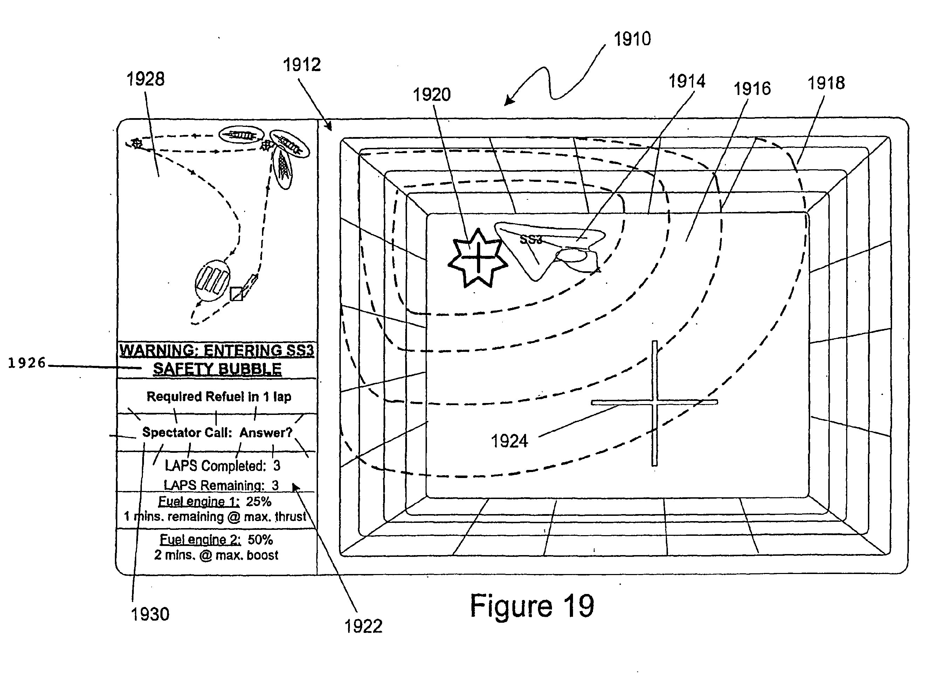

As discussed further along with Fig. 19, the pilots of each rocket-powered vehicle are optionally provided with a heads up display that may, in various combinations, display other competitors, the competitor's safety bubbles, the vehicle-specific virtual tunnel within which the vehicle should navigate, the overall racecourse tunnel, virtual pylons, physical data and/or obstacles. Each pilot preferably receives warnings as they approach bubbles of other aircraft or move out of their vehicle-specific tunnel, which can optionally be integrated into the control functions of the rocket-powered vehicle itself. Race moderators can optionally have the ability to increase or decrease the size of the bubbles to allow closer clustering of race participants or to provide deliberate separation.

As illustrated in Fig. 14B, racecourse **1429** may exist in a three-dimensional plane initially reaching into the sky, height **1436.** Racecourse **1429** may include one or more tracks **1434**, which may have a dimension **1438** in the downstream direction and a dimension in the cross plane direction. In one configuration, height **1436** and dimensions **1438** may be the same to form a generally circular track. Track **1434** may have a variety of sizes, shapes and dimensions. In one embodiment, height **1436** is between one-half and one and a half miles, which should be viewable by spectators via binoculars or another viewing aid, and preferably is about one mile, which is a relatively safe height that may also be viewable by the spectators. In other embodiments, racecourse **1429** and/or track **1434** may expand out to include larger and larger volumes of space beyond one and a half miles, reaching further into the sky vertically, and/or in the crosswise and downstream directions. In addition, the race can extend vertically to sub orbital altitudes, or can circle the earth or even extend to the moon or beyond. Constraints on the racecourse and tracks include performance limitations of the rocket-powered vehicles themselves, and may involve considerations of the ability to bring the race to the spectators through remote display technologies in a way that keeps it exciting and creates a shared sense of close-in participation.

In one configuration of rocket-powered vehicle competition **1410**, each rocket-powered vehicle preferably has a pre-determined maximum quantity of rocket fuel as measured by mass or an estimated engine burn time at a certain thrust. Each rocket-powered vehicle may also be limited to a pre-determined maximum burn time for its rocket engine(s), which may be provided in concert with pre-determined maximum thrust parameters. The pre-determined maximums will be selected to ensure periodic refueling of each rocket-powered vehicle during the competition.

Rapid refueling via team-specific pits may be an option or a requirement for rocket-powered vehicle competition **1410**. Rapid refueling can permit long duration races while providing the spectators with a close look at the race teams, which can occur during the actual race as the rocket-powered vehicles are being refueled and serviced. For instance, a quantity of rocket fuel sufficient for a burn time of four minutes may be established for the pre-determined maximums, which may permit a rocket-powered vehicle to navigate a single lap of racecourse **1429** in a rapid timeframe if the pilot bums the rocket engine continuously. However, based on this choice, the pilot may need to refuel relatively quickly. A second pilot can strategically choose to proceed at a slower rate that comprises gliding and periodically burning the fuel to maintain speed or to boost the rocket-powered vehicle speed when needed. The second pilot is preferably able to navigate two laps of racecourse **1429** without refueling, but at an overall slower rate than the rate at which the first pilot can complete each lap and undergo rapid refueling therebetween. The pre-tietermined maximums may be established to ensure each rocket-powered vehicle must refuel at least once during the competition or to ensure each rocket-powered vehicle must alternate between boosting and gliding. It will be up to the individual rocket-powered vehicle pilot to decide how to use the fuel throughout the race to conserve fuel, vary thrust, sustain velocity, taxi, etc. The race may be a collection of boost and glide modes as the pilot works to optimally manage the application of rocket thrust while conserving scarce fuel. After the fuel is expended, the pilot preferably glides to land the rocket-powered vehicle and undergo a rapid refueling.

In a rocket-powered vehicle competition **1410**, each participant may optionally be able to strategically develop his propulsion system to provide a selectively-applied booster engine configuration based on anticipated management of the limited supply of fuel and desired engine performance. Various combinations of rocket engines, types of propellants, and nozzle configurations, comprising various nozzle sizes, types and styles, may optionally be developed by each team to strategically meet the pre-selected maximums while attempting to maximize rocket-powered vehicle performance. For example, a participant team may develop a rocket-powered vehicle that has one or two primary rocket engines for vertical takeoff, as well as one or more smaller engines that can be selectively ignited and/or strategically controlled for navigating the racecourse.

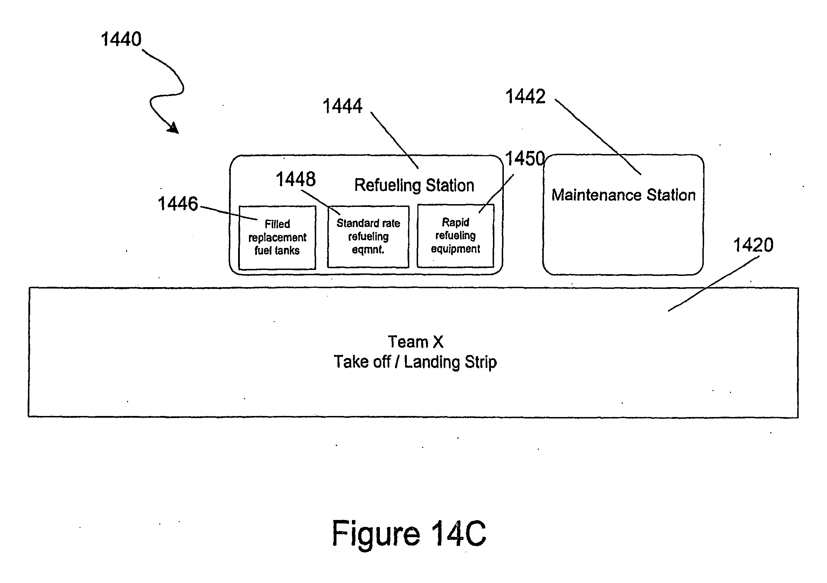

Fig. 14C shows an example support station for a rocket-powered vehicle, which is part of landing and/or takeoff portion **1420** of the spaceport, and comprises one of airstrips **1420** located therein. Typically, each team has its own support station and a dedicated airstrip. Preferably, each rocket-powered vehicle has its own airstrip regardless of whether the rocket-powered vehicle's team may sponsor multiple rocket-powered vehicle entrants. The support station preferably comprises maintenance station **1442** and refueling station **1444**. Maintenance station **1442** preferably houses necessary maintenance equipment and supplies for preparing a rocket-powered vehicle for the competition, supporting the rocket-powered vehicle during competition, and servicing the rocket-powered vehicle after the competition. Maintenance station **1442** may also provide a base camp for team personnel who are supporting the competition.

Refueling station **1444** is preferably proximate the maintenance station **1442** for logistical advantages and to provide parallel maintenance and refueling operations during a pit stop of the competition, such as a rapid refueling stop. Alternatively, the refueling station may be separated a safe distance from the maintenance station **1442** and other structures to reduce the likelihood of a fuel accident affecting a large number of people.

Refueling station **1444** may include filled replacement fuel tanks **1446**, standard rate refueling equipment **1448**, and rapid refueling equipment **1450**. In a configuration in which the supported rocket-powered vehicle comprises removable fuel tanks and/or banks of fuel tanks (discussed below along with an example rocket-powered vehicle shown in Fig. 16), refueling station **1444** preferably has replacement tanks **1446** on hand, filled and ready for rapidly transferring to and installing in the supported rocket-powered vehicle during a pit stop. Refueling station **1444** preferably also has standard rate refueling equipment **1448** for fueling the rocket-powered vehicle during maintenance and race preparations, as well as for fueling the replacement fuel tanks in anticipation of a refueling pit stop. Refueling station **1444** preferably also comprises rapid refueling equipment **1450**, which may provide high-flow rate refueling as needed on an emergency basis, for topping off a rocket-powered vehicle during an unscheduled pit stop, and for refueling fixed tank rocket-powered vehicles. Rapid refueling equipment **1450** may also include support equipment for transporting the filled removable fuel tanks to a rocket-powered vehicle and for quickly completing fuel tank replacement procedures.

For fixed tank rocket-powered vehicle configurations, rapid refueling equipment **1450** may include high-flow rate refueling equipment that provides fuel and oxidizer as needed to the tanks at a high-flow rate, which may also be at a high pressure to support the rapid refueling. In order to avoid potential safety issues that may be associated with high pressure/high velocity refueling, the high-flow rate equipment may have large cross-sectional conduits, which can provide a rapid volumetric flow rate without pumping the fuel at high velocities and/or at high pressures (beyond pressures required to maintained certain fuels and oxidizers in a liquid state). In conjunction with the rapid volumetric flow rate equipment, a corresponding rocket-powered vehicle would preferably have large cross-sectional ports to avoid narrowing the fuel flow and thereby increasing the flow velocity to maintain the rapid volumetric flow rate. The large cross-sectional ports may be in addition to standard fuel ports used for standard refueling procedures.

Fig. 16 shows an example rocket-powered vehicle **1610** that may be used to selectively-apply thrust to conserve fuel while providing desired performance characteristics. However, rocket-powered vehicle **1610** may be used to practice other aspects of the invention, comprising performing methods **50, 150** and **1510** and aspects related to rocket-powered vehicle competitions **10**, **110** and **1410**. Rocket-powered vehicle **1610** is generally the same as rocket-powered vehicle **12** shown in Figs. 6-8 except as discussed hereafter. As shown, rocket-powered vehicle **1610** comprises flight system **1632** and propulsion system **1628**. Propulsion system **1628** comprises primary rocket engine **1640**, secondary rocket engine **1642**, and propellant **1630**. Rocket-powered vehicle **1610** is a fixed-wing aircraft having horizontal flight functionality and glide functionality similar to conventional jet aircraft, as well as vertical flight functionality as a rocket-powered spacecraft. As an example, rocket-powered vehicle **1610** may be based on the aircraft known as EZ ROCKET made by XCOR AEROSPACE having a place of business in Mojave, California, United States of America.

Propellant **1630** may include a variety of rocket fuels, including but not limited to an oxidizer (e.g., liquid oxygen, nitrogen tetroxide, nitrous oxide, air, hydrogen peroxide, perchlorate, ammonium perchlorate, etc.) plus a fuel (e.g., light methane, hydrazine-UDMH, kerosene, hydroxy-terminated polybutadiene (HPTB), jet fuel, alcohol, asphalt, special oils, polymer binders, solid rocket fuel, etc.). The fuel is preferably stored in fuel tank **1644** and the oxidizer is stored in another fuel tank **1646.** The fuel tanks may be disposed within wings of the rocket-powered vehicle, within the body of the rocket-powered vehicle, or may be carried underneath the rocket-powered vehicle. In one configuration, the fuel tanks may be removable tanks, such as a single tank or a bank of smaller tanks that can be removed and installed on the rocket-powered vehicle relatively quickly. For example, rocket-powered vehicle **1610** may include a pair of storage bays (not shown) into which a bank of tanks **1644** or **1646** may be secured. Rocket-powered vehicle **1610** may also include detachable couplings (not shown) for connecting to the bank of tanks. The detachable couplings may include a variety of clamps with seals (e.g., O-rings) connecting pressurized piping between the bank of tanks and the rocket-powered vehicle propulsion system. In another configuration, the fuel tanks may be fixedly attached or formed within the rocket-powered vehicle, such as being formed within the wings

As shown in Fig. 16, the propulsion system preferably further comprises piping **1650** for delivering the propellant to primary rocket engine **1640** and secondary rocket engine **1642**, as well as valves **1652** and pumps **1654** for controlling the delivery of the propellant to the engines. Preferably, a single pair of fuel tanks **1644** and **1646** feeds both of the engines, which can simplify the design of the rocket-powered vehicle and can assist with permitting the fuel tanks to be rapidly refueled. In addition, the two engines preferably share as many common parts as possible, such as pumps and certain control valves, to avoid unnecessary mass and complexity of the rocket-powered vehicle. However, the rocket-powered vehicle may also include separate tank systems for each engine and other independent components. In addition, each engine may include its own combustion chamber and nozzles. The valves and pumps may be controllable to direct fuel and oxidizer to one combustion chamber or the other, and they may be controllable to direct fuel and oxidizer to both rocket engines depending at the desired level of thrust or fuel consumption. As shown in Fig. 16, secondary rocket engine **1642** may be placed underneath primary rocket engine **1640** to apply thrust along its longitudinal axis. However, the secondary rocket engine may be placed at various locations on the rocket-powered vehicle with respect to the primary rocket and may include a plurality of secondary rocket engines placed at various locations.

In one configuration, the primary rocket engine is used mainly for vertical takeoff while the secondary rocket engine is principally used for maneuvering through the course, maintaining velocity, and boosting velocity. In another configuration, the primary rocket engine has selectively controllable thrust settings and provides both thrust for vertical takeoff and for maneuvering through the course, whereas the secondary rocket engine provides thrust for taxiing along runways. Both engines can be used simultaneously in other configurations to provide a maximum amount of thrust, but at the expense of consuming fuel at the maximum rate. Alternatively, one engine can be run to conserve fuel while still maintaining a reasonable velocity. Generally, any desired configuration of the primary and secondary rocket engines is possible.

In one configuration, options for the engines may be dictated for the race to limit the variety of propulsion systems. For instance, the primary rocket engine may be required to be an on-off engine for all participants, which provides primary thrust for vertical take-off. The secondary rocket engine may be directed to have a finite number of thrust levels, such as low, medium and full thrust. It is understood that a wide variety of rocket engine types with a wide variety of thrust levels and control features may be possible for the rocket-powered vehicles. However, mandating parameters such as the number of rocket engines, the maximum thrust for the engines, thrust levels for the engines, controllability of the engines comprising directional controls, etc. can significantly add to the amount of strategic considerations for the race participants and can, therefore, add to the excitement for the event. Thrust levels may be controlled by adjusting the flow rate of fuel and oxidizer into the combustion chamber via controlling pumps **1652** and valves **1654** illustrated in Fig. 16.

As desired, one or both engines can have movable nozzles **1660** and thrust vector control mechanisms for maneuvering the rocket-powered vehicle based on the orientation and magnitude of the rocket thrust vector. The selection of engine configurations and controls may be significant for a particular team according to their strategy for winning the race. As noted above, the secondary engine may be adapted to primarily provide boost augmentation rather than to taxi or sustain velocity. For example, once fired, the secondary rocket engine can generate a significant boost and remain ignited until the propellant bums out. In another configuration, the secondary rocket engine can include a pair of small rocket boosters that are fired at various times as selected by the race team and pilots. In another example, the secondary rocket engine can include a bank of small rocket boosters, such as about five boosters. In a further example configuration, the secondary rocket engine can be powered via a solid propellant alone while relying upon atmospheric oxygen to be an oxidizer. However, such a configuration may have limited applicability to low altitude uses at which sufficient oxygen can be obtained when needed.

As further shown in Fig. 16, rocket-powered vehicle **1610** may include nozzle deflectors **1656** on a nozzle of secondary rocket engine **1642** that modify the exit cone from the engine to produce a unique sound. The spectators can use the unique sound to identify the rocket-powered vehicle or its team. Placement of the deflectors on the secondary rocket engine in a configuration in which it acts as a taxi engine can be beneficial for providing the unique sound whenever the rocket-powered vehicle is taxiing and, therefore, is within audible range of the spectators. Alternatively, the nozzle deflectors can be placed on primary rocket engine **1640**, which may be beneficial for providing the unique sound during vertical takeoff. Nozzle deflectors **1656** can be used at all times to produce a signature sound for the rocket-powered vehicle and/or its team while that engine is being fired. Alternatively, nozzle deflectors **1656** can be selectively activated and deactivated to provide the signature sound as desired, such as whenever the rocket-powered vehicle is within audible range of the spectators.

As further shown in Fig. 16, rocket-powered vehicle **1610** may include a sound generator **1658,** such as a conventional horn or siren, which can augment the sound generation capabilities of nozzle deflectors **1656** or provide an alternative sound generation mechanism compared with the nozzle deflectors **1656**. The sound generator may augment the sound signature of the deflector nozzles (e.g., provide a similar sound to that generated via the nozzle deflectors), play a previously-recorded version of the unique sound, or even amplify the sounds generated via nozzle deflectors previously considered or may be relied upon alone to provide the sound signature for the rocket-powered vehicle. The flight system may be configured to activate the sound generator and/or the nozzle deflectors on command from the pilot or another member of the team. In addition, the flight system may be configured to automatically activate it below a certain altitude or whenever the flight system receives a signal or other indication that it is located proximate the spaceport.

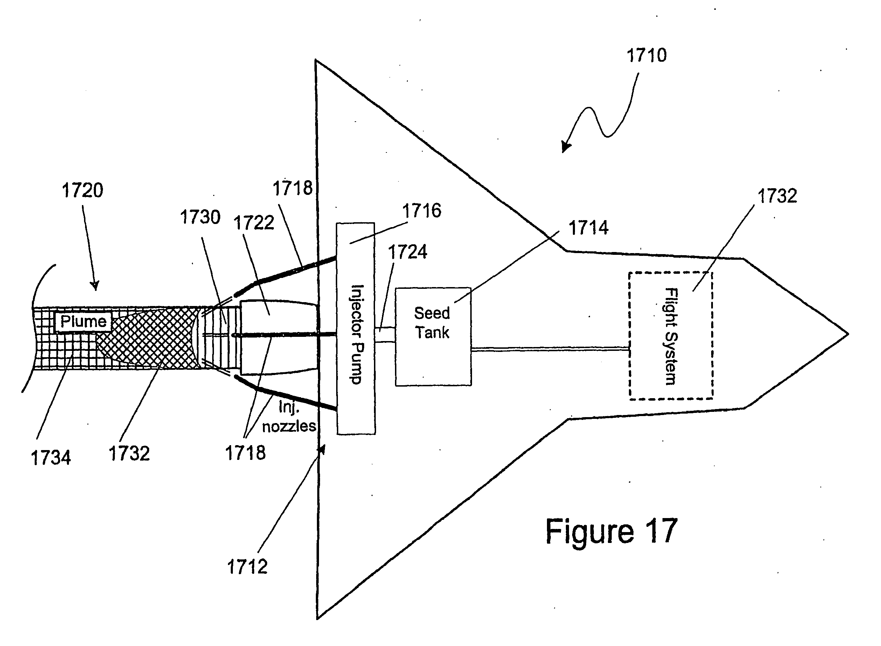

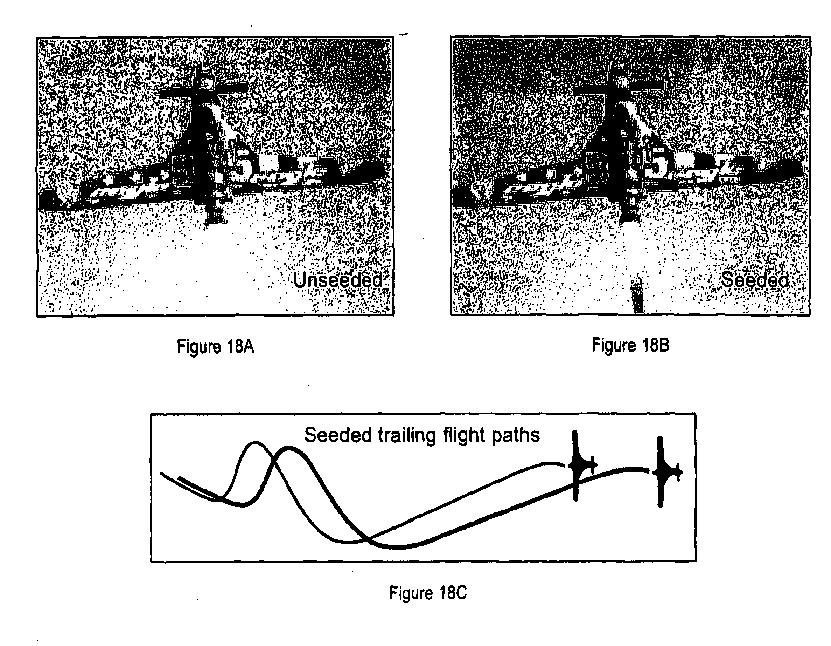

Referring now to Figs. 17 and 18A-C, rocket-powered vehicle **1710** is shown. Rocket-powered vehicle **1710** generally comprises the aspects and features of rocket-powered vehicle **1610**, except as discussed hereafter. As shown, rocket-powered vehicle **1710** comprises plume visualization system **1712**, which enhances the visibility of the rocket plume. In addition, plume visualization system **1712** may mark the plume from one or more of the rocket engine in a persistent manner such that the plume remains viewable for a period of time after the rocket-powered vehicle creates it. For instance, the plume may mark the trail of a rocket-powered vehicle for a period between 5 seconds to 1 minute, which permits spectators to easily follow the rocket-powered vehicles along the directly viewable portions of the racecourse. In one configuration, each rocket-powered vehicle marks its plume in manner specific to that rocket-powered vehicle or racing team, such that the plume identifies the rocket-powered vehicle and its path. For instance, each rocket-powered vehicle or team may have one or more colors associated with it. Thus, each rocket-powered vehicle may have a visual signature via its plume, and it may also have a sound signature as discussed above along with Fig. 16. Accordingly, spectators can be provided with multiple cues to help them keep track of the fast-paced race occurring overhead amid the excitement of the contest.

As shown in Fig. 17, plume visualization system **1712** preferably comprises a seed tank **1714** in communication with rocket-powered vehicle flight system **1732**, an injector pump system **1716**, and injector nozzles **1718**. Plume visualization system **1712** preferably marks one or more plumes from the rocket-powered vehicle via injecting plume seed containing chemicals into hot rocket plume **1720** as it exits one or more rocket nozzles **1722** of the rocket engine. Seed tank **1714** preferably retains the chemicals, which may be in a liquid form conducive for pressurized spraying. Injector pump **1716** preferably receives the chemicals from the seed tank via conduit **1724** between the two. The conduit may include components specific to the type of chemical used, such as a mixing tank for mixing one or more chemicals to form the chemical or place it in an active form, and/or for placing the chemicals in a mixture conducive for spraying, etc. Conduit **1724** may also include valves and other controllable devices for controlling the preparation and flow of the chemicals to injector pump **1716**. Injector pump preferably **1716** delivers the chemical to injector nozzles **1718**, which preferably spray it directly into the plume as it exits the rocket engine nozzle.

The visual identifier may be generated via a chemical reaction that occurs in response to the heat of the plume, which causes the chemicals to burn or radiate a particular color. In one configuration, the intensity of the color may vary according the thrust level of the engine. This may be accomplished by providing temperature-sensitive chemicals to the plume that cause radiant light energy at different temperatures, thereby displaying to spectators a piecewise spectrum of colors that vary in wavelength according to thrust level. For instance, as shown in Fig. 17, a first portion of plume **1730** emits the natural colors of combustion for the particular propellant being burned, such as kerosene or alcohol. A second portion of plume **1732**, which is located just downstream from entry of the chemicals, emits colors based on initial reactions with the chemicals injected into the plume, such as the burning of metal salts or pyrotechnic chemicals. A third portion of plume **1734** further downstream from the second portion emits different colors, which may be produced by cooling combustion products, continuing reactions such as longer duration pyrotechnic reactions, continued reactions between chemicals and the atmosphere, etc. Preferably, however, the first and second portions include common colors identified with a particular rocket-powered vehicle or team, such as various blues for one team or various reds for another team.

In another configuration, the intensity of color may be deliberately varied based on the flow rate of plume seed sprayed from the injector nozzles. For example, an intense color may deliberately be provided during vertical take off or as a rocket-powered vehicle crosses a finish line marker. The pilot may be able to control plume visualization system **1712** via controls of the flight system. Alternatively, plume visualization **1712** system may be controlled remotely via ground control communications to the flight system. In another configuration, the flight system may be programmed to control automatically plume visualization system **1712** according to location of the rocket-powered vehicle.

The chemicals of the plume seed may include one or more metal salts. When metal salts are exposed to the flame of the rocket plume, they typically give off light characteristic of the metal. The metal ions combine with electrons in the flame, which are raised to excited states because of the high flame temperature. Upon returning to their ground state, they give off energy in form of light (including but not limited to a line spectrum) that is characteristic of that metal. Several metal salts, for example alkali metal salts, give off a characteristic color visible to the human eye. Examples of chemicals that may be used various combinations include sodium, potassium, aluminum chloride, boric acid, calcium chloride, cobalt chloride, copper chloride, lithium chloride, magnesium chloride, manganese chloride, sodium chloride, strontium chloride. Pyrotechnic chemicals commonly used in fireworks displays may used as well, comprising antimony trisulfide, ammonium perchlorate, ammonium chloride, aluminum, and more.

In an alternative configuration (not shown), rocket-powered vehicle **1710** comprises a non-reactive smoke generator, which provides non-reactive identification smoke when the rocket engine is not being fired. The non-reactive smoke generator preferably turns off when the rocket engine is being fired to capture the natural combustion colors, such as the yellow color of burning kerosene or the violet/blue of burning alcohol. When the rocket engine turns off and the vehicle is gliding, the smoke generator may emit identification smoke to demonstrate the rocket-powered vehicle's glide path. Thus, rocket engine combustion highlights the rocket-powered vehicle's flight path when powered, and the non-reactive smoke generator highlights its flight path when gliding. In another configuration, a plume visualization system may be used during rocket firing to identify the plume of the particular rocket-powered vehicle or team, and a non-reactive smoke generator may be used by the same rocket-powered vehicle while gliding to produce identification smoke that generally matches the colors produced by the plume visualization system. Thus, regardless of the firing status of rocket engines, a visual signature may be constantly provided that highlights the rocket-powered vehicle's flight path.

Referring now to Fig. 19, heads up display **1910** is shown as part of a rocket-powered vehicle console in a rocket-powered vehicle, rocket-powered vehicle **1610** shown in Fig. 16, in accordance with embodiments of the invention. Heads up display **1910** may be shown on a rugged display device **1912**, such as the rugged displays currently manufactured according to United States military specifications for use in military vehicles. The display can show a wide variety of information to the pilot in a variety of views comprising vehicle control information, racing information, maintenance information, navigation information, etc. The display device may be connected to flight system **1632** and/or other systems and flight computers. Fig. 19 shows an example view of display **1910** during a racing competition, such as competition **1410** of Figs. 14A and 14B. As illustrated, the display **1910** may show, in various combinations, other competitors **1914**; competitor's safety bubbles **1916**; the vehicle-specific virtual tunnel within which the vehicle should navigate (not shown); the overall racecourse tunnel **1918**; virtual pylons **1920**; physical data, such as an actual view of a competitor **1914**, obstacles, or other physical objects; the location of pilot's vehicle **1924**; and competition information **1922**. The information shown may be generated by the flight computer based on information received from flight control (e.g., status of competitors), pre-loaded race information (e.g., racecourse tunnel), navigation information received from flight control (e.g., your current location), navigation information from various sensors (e.g., GPS receivers), vehicle sensors (e.g., fuel level sensors, cameras, etc.), etc. Display **1910** may also show an overall view of racecourse **1928** showing the status of other participants and the current location of the pilot's vehicle in relation thereto.

Competition information **1922** may include warnings **1926**, such as a warning when a pilot approaches or enters bubbles of other vehicles, moves out of their vehicle-specific tunnel, moves out of the racecourse tunnel, or misses a virtual pylon or other waypoint of the race, etc. The warning can flash red on the display for certain warnings. In addition, tactile and audible warnings can be provided to the pilot, such as vibrating a control handle the pilot is using or playing a warning sound. Similarly, positive indications (not shown) can be provided when the vehicle successfully hits a waypoint, such as navigating around a virtual pylon or flying through a virtual gate. For instance, a green light or message can flash on the display to show the vehicle successfully passed a virtual pylon. In addition, tactile or audible indications can also be provided for successfully completing the task. Overall view **1928** may also include warnings **1926** and positive visual indicators, such as flashing in red a missed virtual pylon or flashing the same pylon in green when the pilot successfully navigates around it.

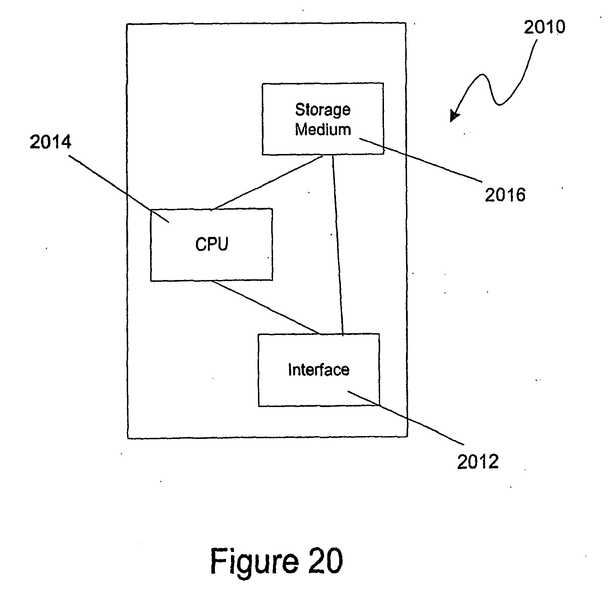

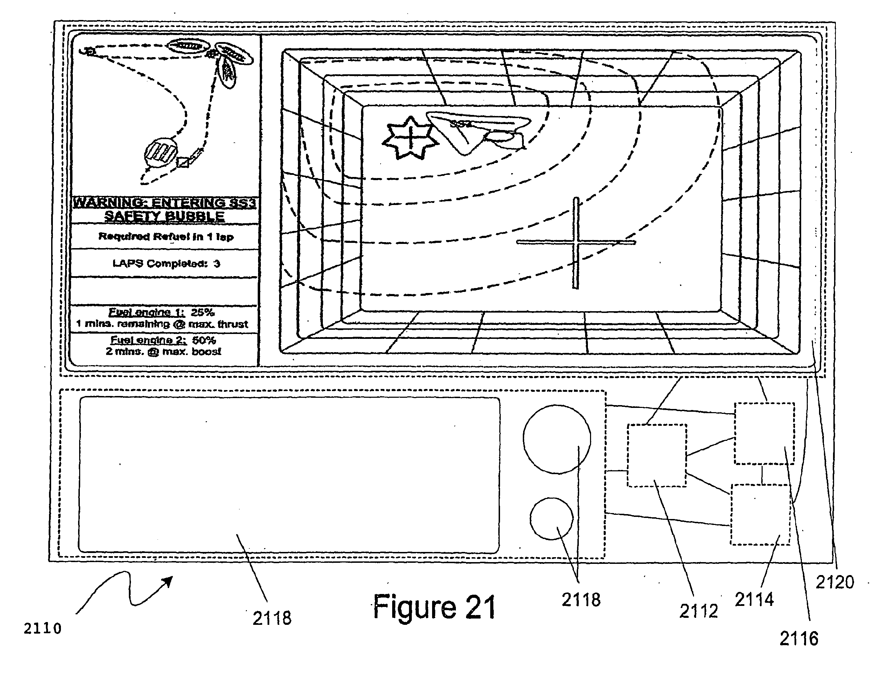

Referring now to Figs. 20 and 21, spectator server **2010** (Fig. 20) and spectator computing device **2110** (Fig. 21) are generally shown according to embodiments of the invention. Spectator server **2010** generally comprises the same aspects as telemetry computer **87** and **34** discussed above along with Fig. 13, except as described hereafter. Spectator server **2010** may be a separate entity from the telemetry computer **87** and **34,** it may be a separate logical entity from the spectator server **2010** that resides on the same computer or group of computers, or it may be a completely separate entity from telemetry computer **87** and **34** that may or may not be in communication with telemetry computer **87** and **34.** Spectator server **2010** is a computing entity that interacts with spectators to permit them to participate interactively in a racing competition, such as competitions **10**, **110** and **1410**. The interactivity may include providing status and other race related information to spectators, such as is described along with the description for telemetry computer **87** and **34**. In addition, spectator server **2010** may permit spectators to interact directly with race participants and to be involved with aspects of the race itself, such as voting on racecourse options. In addition, spectator server **2010** may provide gaming information to spectators or other people to permit a variety of gaming options, such as virtual racing against actual participants. A spectator computing device is a device that spectators or other interested people may use to interact with the spectator computer for gaming purposes or other racing purposes. A spectator computing device may be specifically-designed device for the racing competition. Preferably, however, the spectator computing device is a conventional computing device, such as a personal digital assistant or a laptop computer.

As shown in Fig. 20, spectator server **2010** preferably comprises an interface **2012**, a CPU **2014** and a storage medium **2016**, such as a hard drive, a network accessible storage location, local memory, etc. The interface may include one or more interfaces, such as a wired and wireless network interfaces. Storage medium **2016** preferably stores software for instructing the CPU to perform various steps such as providing updated racing information to spectator computing devices, hosting racing games based on race information, and permitting spectators to interact with race participants. In addition, spectator server **2010** may act as web site to permit a spectator computing device or other devices to have real time participation in race events.

As shown in Fig. 21, spectator computing device **2110** generally comprises an interface **2112**, a CPU **2114** and a storage medium **2116**, such as a hard drive, a network accessible storage location, local memory, etc., input devices **2118**, and a display **2120**. The interface may include one or more interfaces, such as a wired and wireless network interfaces. Storage medium **2116** stores software for instructing the CPU to perform various steps such as receiving updated racing information from the spectator server and/or the telemetry computer, playing racing games based on the race information, and interacting with race participants. The storage medium may have racing software stored locally thereon, with can permit the user to race a virtual rocket-powered vehicle at any time regardless of the device's connectivity status with other computers. When the device is connected to other computers, however, the user may choose to race his virtual vehicle as part of actual ongoing races via data from spectator server **2010** and/or against other virtual competitors. Optionally, spectator server **2010** may host the gaming software and spectator computing device **2110** may interact with spectator server **2010** for racing games.

Browser-based software and/or racing specific software stored on the spectator computing device may allow spectators to accomplish a wide variety of functions related to rocket-powered vehicle races, which may be selectable in an interactive manner to provide the user with a hands-on experience. In one configuration, a spectator may select a soft key that brings up an actual racecourse and shows a virtual vehicle thereon for the spectator to race. The display would preferably show computer generated images depicting the actual rocket racers, driven by differential GPS or the equivalent, so that the placement of the computer generated vehicles on the screen matches that which is taking place in the real live race. If the user clicks on a specific vehicle, the spectator may then select from a number of functions that might include listening in on the cockpit conversation and other audibles, viewing either a virtual instrument cluster driven with real-time telemetry data, or viewing a live video feed of the actual instrument cluster. Other options might allow the spectator to stream a video of the pilot's face, or stream a variety of video feed from a number of different cameras or telemetry stream from various instrumentation suites installed on the rocket vehicles. The spectator can bring up multiple pilots on the screen and pit one against the other.

In one configuration, preferably operated under stringent safety protocol, a spectator using the computing device may compete via the spectator server for the opportunity to speak with a pilot during the race. Optionally, with safety being a primary concern, spectators can even compete for the opportunity to ignite remotely a rocket engine boost from their laptop computer by hitting a specific button during a pre-selected timeframe and after providing the winning usemame and password. Thus, spectators could actually and virtually participate in a rocket-powered vehicle competition.

Example 5: Rangeless Air Racing Maneuvering Instrumentation Network

A system to enable the implementation of an immersive piloting, safety and entertainment experience may be referred to as a Rangeless Air Racing Maneuvering Instrumentation Network. It preferably involves the capture, processing, distribution and display of data in a variety of formats with varying degrees of end-user interactivity.

Users of the Rangeless Air Racing Maneuvering Instrumentation Network include, but are not limited to, pilots, navigators, co-pilots, air crew, ground crew, race teams, race league officials, safety officials, Federal Aviation Administration (FAA) personnel, training personnel, on-site fans, remote fans, gamers, technology developers, TV stations, satellite broadcast stations, mobile content providers, archival agencies, news broadcaster, online media sources, camera operators and automated data collection and data redistribution infrastructure.

The technological worldview of the Rangeless Air Racing Maneuvering Instrumentation Network embraces convergence of the real and virtual worlds to lift spectator perceptions of excitement, awe, thrill and danger to entirely new levels. Fans of rocket powered racing events will be able to access the sport both live and remotely via use of the Network - and will be rewarded with an accessible, information-rich environment no matter what their chosen interface with the sport.

The Rangeless Air Racing Maneuvering Instrumentation Network preferably uses simulation technology to enhance the experience of rocket racing for all audiences. Simulation technology is an aspect of the Network that can contribute to bringing the revolutionary sport of rocket powered vehicle race competition to millions of fans worldwide.

The Rangeless Air Racing Maneuvering Instrumentation network is preferably a hybrid of live and virtual simulation action that blends live action with a virtual world of rich data overlays to create a hybridized form of entertainment the world has never experienced.

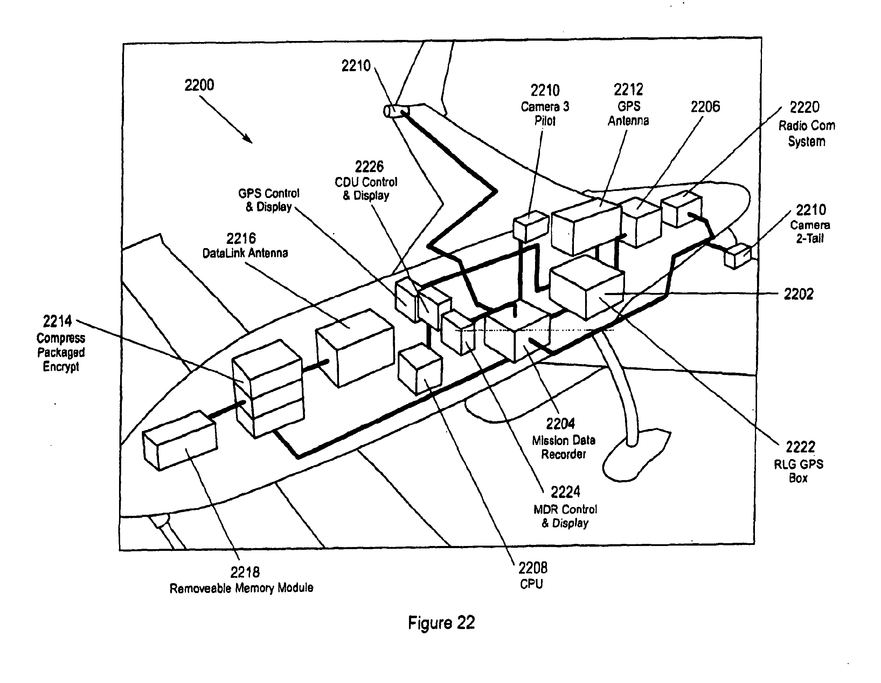

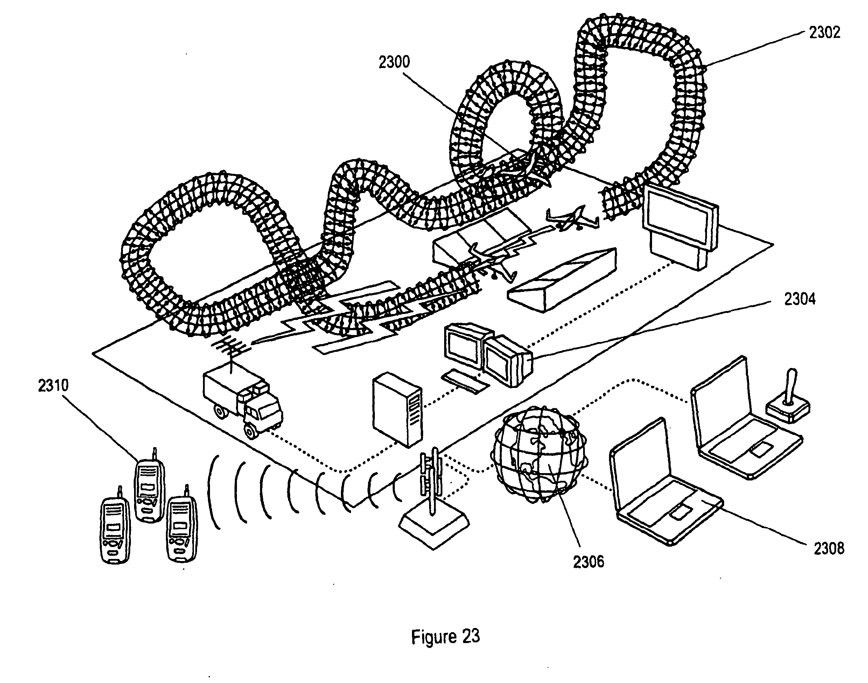

Referring to Figures 22 and 23, each rocket-powered vehicle, indicated generally at 2200, may carry on board an array of instrumentation and related hardware to connect it to the virtual networked race environment, and to project the simulated data overlays to end users. Each rocket powered vehicle **2200** may carry GPS receivers **2202,** and a recorder **2204** to track location and orientation at all times. In place of, or as an augmentation to GPS receivers **2204,** an inertial navigation system (INS) **2206** may be employed for the same purpose of generating information that characterizes position and orientation information for each of the rocket-powered vehicles **2200** in three-dimensional space. The combination of GPS **2202** and INS **2206** preferably offer advantages in resolving both translational and rotational dynamics. Each rocket powered vehicle also preferably comprises a CPU #**2208** for processing data.

Each rocket powered vehicle **2200** may also carry a camera or Digital Video Recorders (DVRs) **2210** for the recording of digital video. Transmitter/receiver **2212** in the rocket powered vehicle **2200** can send the position and orientation data, the digital video data and other data to a ground station (not shown) at the broadcast center, and receive pertinent information for display and processing inside rocket powered vehicle **2200**. The transmitter/receiver may optionally include a compress/encrypt package **2214**, a datalink antenna **2216**, and/or a removable memory module **2218**.

Each rocket powered vehicle may carry Radio/Com system **2210** for two-way interface, RLG/GPS box **2222** that is in direct link to a Mission Data Recorder (MDR) **2204**, a MDR Control and Display **2224** as well as a Control Display Unit ("CDU") and Display **2226**.

Each rocket powered vehicle **2200** may have an in-cockpit or heads-up display (HUD) or head-mounted display, each equipped with a multi-function display (MFD) capability able to display simulated data overlay information from the onboard computer, as well as any received data from the ground.

As part of each ground station support infrastructure, there may be an information hub/pod that keeps a constant, two-way data link with each racer, and with each ground team.

The hub/pod can be configured to manage all aspects of the race, the safety protocols, and also serve as a broadcast and media center for creation and transmittal of the official race broadcast streams to both spectators and at-home fans.

Each hub/pod preferably allows fans to connect wireless devices the race network for access and interface customizations available to the at-home fans. Each Race Site may be able to monitor racers in real-time that are within a designated radius.

All pods may be capable of GPS position determination, may have data recording capability, and may utilize pod-to-pod UHF data communications to facilitate rangeless communication.

All data transmissions may be unclassified or encrypted for secure transmission of sensitive data.

The system may accommodate at least two race participants, but may be capable of supporting many more vehicles of varying design, whether airborne or ground vehicles.

The hub/pod may execute race simulations and transmit results to the race site hub as well as wirelessly to spectator handsets or other devices.

The processing capability may be located either onboard the vehicle, on the ground, or draw from the combination of both, can enable the real-time merging of real-time video with rich data overlays. The processing capability preferably enables the real-time insertion of synthetic objects into real-time video using sophisticated occlusion dynamics to designate what objects, real or synthetic, appear in the foreground, and what objects appear in the background. The data overlays preferably will depict a virtual world that possesses rules, properties and dynamics that make it appear as through it is real, not an afterthought generated through computer simulation. In one configuration, the virtual data overlay preferably contains a series of parallel three dimensional tunnels in the sky, inside of which, individual rocket powered vehicles are directed to remain in order to affect vehicle to vehicle separation and guide the pilots of such vehicles through the sky on a race track that is both exciting to watch from the perspective of a viewer and, from an absolute level, is safe.

The virtual tunnel may be depicted by a series of rings that are either connected along longitudinal paths about the ring circumference, or other means of connectivity, or stand alone. The rings may be positioned in three-dimensional space, along the desired track at intervals that give the pilot and viewers a good presentation of where the rocket powered vehicle should be traveling in this three dimensional space inside of which the rocket powered vehicle race is intended to occur.

The data characterizing the virtual tunnel system can be made available to a variety of sources for a variety of purposes. In one configuration, pilots of the rocket powered vehicles can be delivered to the virtual tunnel system on an in-panel, heads-up or head mounted display with the objective of providing the pilot with a visual guide inside of which he would be directed to pilot his rocket power aircraft for the purpose of maintaining separation from other vehicles engaged in the race, and for the purpose of flying a race course that is both entertaining for spectators to watch and safe to fly within the performance capabilities of the particular rocket powered vehicles.

In another configuration, the data characterizing the three-dimensional tunnel system may be made available to various display outlets on the ground, for processing and display to a variety of end users. In such a case, the data characterizing the virtual tunnel system can be generated precisely in three dimensional space with a fixed earth reference system. Then, based on the location and orientation of various ground or airborne cameras, the virtual tunnel system may be accurately overlaid in three dimensional space. If the camera angle or location were to change in real time, the manner in which the three-dimensional virtual tunnel system would also be adjusted.

One particular implementation feature of the virtual tunnel system is to preferably use the process of occlusion dynamics to portray the rocket powered vehicles as flying through the virtual rings that comprise the virtual tunnel.

In another configuration, the virtual overlay preferably contains not only the virtual tunnel, but additionally, a virtual bubble around each rocket powered vehicle depicting a safety bubble.

In yet another configuration, the data overlay may contain, in addition to the aforementioned overlay elements, virtual depictions of other rocket powered vehicles, data containing information of position within the race, vehicle performance information, predictive artificial intelligence designed to improve pilot performance, general race information and other artificially generated synthetic objects that tend to improve the race safety posture or deliver enhanced visual entertainment to fans.

Figure 23 illustrates components of an example integrated Rangeless Air Racing Maneuvering Instrumentation system. Beginning with rocket powered vehicles **2300**, also known as airborne units, data is collected, processed, stored, displayed and telemetered both to other airborne units and the ground receiving stations. This comprises, but is not limited to, airborne geospatial parameters **2302**, performance parameters and video feeds. From ground receiving station **2304** the data is preferably passed on to a processing capability where it is preferably merged with the virtual world **2306** prior to redistribution to end users **2308.** Once the virtual world is suitably merged with appropriate video feeds from either the airborne units or grounds camera units, it is preferably processed for redistribution. Users of the processed hybrid real/virtual data include, but are not limited to pilots, safety officials, race teams, grounds crews, race officials, on site fans, remote fans, TV broadcast units, training infrastructure and gaming infrastructure. Handsets **2310** feeds and receives data as well.

## Claims

1. A method for racing an actual aerial vehicle, the method comprising:
providing race criteria to a group of racing participants, the race criteria identifying an aerial race course for the actual aerial vehicle;
launching into a first aerial race course a first actual aerial vehicle;
launching into a second aerial race course a second actual aerial vehicle; the method being **characterised by**
providing a heads up display in one or more of the aerial vehicles, the heads up display comprising a three-dimensional view of an aerial race course based on the aerial race course identified in the race criteria.

2. The method of claim 1 further comprising providing a stadium comprising at least one large display screen for viewing by the spectators.

3. The method of claim 2 wherein each of the aerial vehicles comprises a plurality of sensors on board, each of the sensors gathering information from its respective vehicle; at least one transmitter on each of the aerial vehicles in communication with the sensors and operable to transmit the information from the sensors; and one or more processors operable to collect and process the information contained in the transmissions, the one or more processors displaying on the large display screen the collected and processed information as race information to the spectators, wherein the race information comprises at least a virtual aerial race course.

4. The method of claim 3 wherein the race information comprises at least one parameter selected from the group consisting of airborne geospatial parameters, performance parameters, video feeds, and safety bubble data.

5. The method of claim 3 wherein the one or more processors enables a data overlay comprising depictions of the aerial vehicles and information of position of the aerial vehicles within the race.

6. The method of claim 5 wherein the data overlay comprises progression of at least one aerial vehicle through at least one race course.

7. The method of claim 1 wherein the race criteria comprises three-dimensional safety data for preventing collisions between competing vehicles.

8. The method of claim 7 wherein the three-dimensional safety data comprises a first vehicle-specific tunnel for the first aerial vehicle and a second vehicle-specific tunnel for the second aerial vehicle.

9. The method of claim 1 wherein the heads up display comprises a location identifier showing the current location of the vehicle in the race course.

10. The method of claim 1 wherein at least one of the aerial vehicles is a rocket-powered vehicle.

11. The method of claim 1 wherein the race criteria comprises requiring each aerial vehicle competing in the race to perform a refueling operation and the step of racing comprises:
the first aerial vehicle performing a first refueling operation; and
the second aerial vehicle performing a second refueling operation.

12. The method of claim 1 further comprising:
maneuvering the first aerial vehicle proximate a group of spectators and, while proximate the group of spectators, performing a pre-determined maneuver; and
maneuvering the second aerial vehicle proximate the group of spectators and, while proximate the group of spectators, performing a pre-determined maneuver.

13. The method of claim 1 further comprising enabling communication between a spectator and a pilot of one of the aerial vehicles.

14. The method of claim 1 further comprising displaying the race course to one or more spectators.

15. The method of claim 14 wherein displaying the race course to one or more spectators comprises a symbolic representation of the aerial vehicles.

## Patentansprüche

1. Ein Verfahren für den Rennbetrieb eines realen Luftfahrzeugs, wobei das Verfahren folgendes umfasst:
Bereitstellen von Rennkriterien für eine Gruppe von Rennteilnehmern, wobei die Rennkriterien eine Luftrennstrecke für das reale Luftfahrzeug identifizieren;
Starten eines ersten realen Luftfahrzeugs in eine erste Luftrennstrecke;
Starten eines zweiten realen Luftfahrzeugs in eine zweite Luftrennstrecke; wobei das Verfahren durch folgendes gekennzeichnet ist:
Bereitstellen einer Head-Up-Anzeige in einem oder mehreren der Luftfahrzeuge, wobei die Head-Up-Anzeige eine drei-dimensionale Ansicht einer Luftrennstrecke basierend auf der in den Rennkriterien identifizierten Luftrennstrecke umfasst.

2. Das Verfahren nach Anspruch 1, ferner umfassend das Bereitstellen eines Stadions, das mindestens einen großen Anzeigeschirm zur Betrachtung durch die Zuschauer umfasst.

3. Das Verfahren nach Anspruch 2, wobei jedes der Luftfahrzeuge eine Vielzahl von Sensoren an Bord, wobei jedes der Sensoren Information von dessen jeweiligem Fahrzeug sammelt; mindestens einen Sender an jedem der Luftfahrzeuge, der mit den Sensoren in Kommunikation steht und zum Senden der Information von den Sensoren operabel ist; und einen oder mehrere Prozessoren umfasst, der/die zum Sammeln und Verarbeiten der in den Übertragungen enthaltenen Information operabel ist/sind, wobei der eine oder die mehreren Prozessoren die gesammelte und verarbeitete Information als Renninformation für die Zuschauer auf dem großen Anzeigeschirm anzeigt/anzeigen, wobei die Renninformation mindestens eine virtuelle Luftrennstrecke umfasst.

4. Das Verfahren nach Anspruch 3, wobei die Renninformation mindestens einen Parameter umfasst, ausgewählt aus der Gruppe, bestehend aus luftraumbezogenen Parametern, Leistungsparametern, Videozuspielungen und Sicherheitsblasendaten.

5. Das Verfahren nach Anspruch 3, wobei der eine oder die mehreren Prozessoren eine Datenüberlappung ermöglicht/ermöglichen, die Abbildungen der Luftfahrzeuge und Positionsinformation der Luftfahrzeuge in dem Rennen umfasst.

6. Das Verfahren nach Anspruch 5, wobei die Datenüberlappung den Verlauf mindestens eines Luftfahrzeugs durch mindestens eine Rennstrecke umfasst.

7. Das Verfahren nach Anspruch 1, wobei die Rennkriterien drei-dimensionale Sicherheitsdaten zur Verhinderung von Kollisionen zwischen konkurrierenden Fahrzeugen umfassen.

8. Das Verfahren nach Anspruch 7, wobei die drei-dimensionalen Sicherheitsdaten einen ersten fahrzeug-spezifischen Tunnel für das erste Luftfahrzeug und einen zweiten fahrzeug-spezifischen Tunnel für das zweite Luftfahrzeug umfassen.

9. Das Verfahren nach Anspruch 1, wobei die Head-Up-Anzeige einen Positionsidentifikator umfasst, der die gegenwärtige Position des Fahrzeugs in der Rennstrecke zeigt.

10. Das Verfahren nach Anspruch 1, wobei mindestens eines der Luftfahrzeuge ein raketenangetriebenes Fahrzeug ist.

11. Das Verfahren nach Anspruch 1, wobei die Rennkriterien umfassen, dass jedes in dem Rennen konkurrierende Luftfahrzeug einen Wiederauftankvorgang durchführen muss, und der Rennschritt umfasst, dass:
das erste Luftfahrzeug einen ersten Wiederauftankvorgang durchführt; und
das zweite Luftfahrzeug einen zweiten Wiederauftankvorgang durchführt.

12. Das Verfahren nach Anspruch 1, ferner umfassend:
Manövrieren des ersten Luftfahrzeugs in die Nähe einer Gruppe von Zuschauern und, während in der Nähe der Gruppe von Zuschauern, Durchführen eines vorbestimmten Manövers; und
Manövrieren des zweiten Luftfahrzeugs in die Nähe der Gruppe von Zuschauern und, während in der Nähe der Gruppe von Zuschauern, Durchführen eines vorbestimmten Manövers.

13. Das Verfahren nach Anspruch 1, ferner umfassend das Ermöglichen einer Kommunikation zwischen einem Zuschauer und einem Piloten eines der Luftfahrzeuge.

14. Das Verfahren nach Anspruch 1, ferner umfassend das Anzeigen der Rennstrecke für einen oder mehrere Zuschauer.

15. Das Verfahren nach Anspruch 14, wobei das Anzeigen der Rennstrecke für einen oder mehrere Zuschauer eine symbolische Darstellung der Luftfahrzeuge umfasst.

## Revendications

1. Procédé pour faire courir un véhicule aérien réel, comprenant :
fournir des critères de course à un groupe de participants à la course, les critères de course identifiant un parcours aérien pour le véhicule aérien réel ;
lancer dans un premier parcours aérien un premier véhicule aérien réel ;
lancer dans un second parcours aérien un second véhicule aérien réel ;
le procédé étant **caractérisé par** la disposition d'un affichage tête haute dans un ou plusieurs des véhicules aériens, l'affichage tête haute comprenant une vue tridimensionnelle d'un parcours aérien sur la base du parcours aérien identifié dans les critères de course.

2. Procédé selon la revendication 1, comprenant en outre l'utilisation d'un stade comprenant au moins un grand écran d'affichage pour une visualisation par les spectateurs.

3. Procédé selon la revendication 2, dans lequel chacun des véhicules aériens comprend une pluralité de capteurs embarqués, chacun des capteurs rassemblant des informations à partir de son véhicule respectif ; au moins un émetteur sur chacun des véhicules aériens en communication avec les capteurs et actionnable pour émettre les informations provenant des capteurs ; et un ou plusieurs processeurs actionnables pour collecter et traiter les informations contenues dans les émissions, le ou les processeurs affichant sur le grand écran d'affichage les informations collectées et traitées en tant qu'informations de course pour les spectateurs, les informations de course comprenant au moins un parcours aérien virtuel.

4. Procédé selon la revendication 3, dans lequel les informations de course comprennent au moins un paramètre choisi dans le groupe constitué par des paramètres géospatiaux de l'atmosphère, des paramètres de performances, des flux vidéos et des données de bulle de sécurité.

5. Procédé selon la revendication 3, dans laquelle le ou les processeurs permettent une superposition de données comprenant des représentations des véhicules aériens et des informations de position des véhicules aériens dans la course.

6. Procédé selon la revendication 5, dans lequel la superposition de données comprend la progression d'au moins un véhicule aérien à travers au moins un parcours.

7. Procédé selon la revendication 1, dans lequel les critères de course comprennent des données de sécurité en trois dimensions pour empêcher des collisions entre les véhicules en compétition.

8. Procédé selon la revendication 7, dans lequel les données de sécurité en trois dimensions comprennent un premier tunnel spécifique au véhicule pour le premier véhicule aérien et un second tunnel spécifique au véhicule pour le second véhicule aérien.

9. Procédé selon la revendication 1, dans lequel l'affichage tête haute comprend un identifiant de positionnement représentant un positionnement actuel du véhicule dans le parcours.

10. Procédé selon la revendication 1, dans lequel au moins l'un des véhicules aériens est un véhicule propulsé par fusée.

11. Procédé selon la revendication 1, dans lequel les critères de course comprennent l'exigence que chaque véhicule aérien en compétition dans la course exécute une opération de ravitaillement en carburant et l'étape de course comprenant :
le premier véhicule aérien exécute une première opération de ravitaillement en carburant ; et
le second véhicule aérien exécute une seconde opération de ravitaillement en carburant.

12. Procédé selon la revendication 1, comprenant en outre :
manoeuvrer le premier véhicule aérien à proximité d'un groupe de spectateurs et, tandis qu'il se trouve à proximité du groupe de spectateurs, exécuter une manoeuvre prédéterminée ; et
manoeuvrer le second véhicule aérien à proximité du groupe de spectateurs et, tandis qu'il se trouve à proximité du groupe de spectateurs, exécuter une manoeuvre prédéterminée.

13. Procédé selon la revendication 1, comprenant en outre le fait de permettre une communication entre un spectateur et un pilote de l'un des véhicules aériens.

14. Procédé selon la revendication 1, comprenant en outre l'affichage du parcours pour un ou plusieurs spectateurs.

15. Procédé selon la revendication 14, dans lequel l'affichage du parcours pour un ou plusieurs spectateurs comprend une représentation symbolique des véhicules aériens.
